(19) Europäisches Patentamt
European Patent Office
Office européen des brevets

(11) **EP 2 450 758 B1**

(12) **FASCICULE DE BREVET EUROPEEN**

(45) Date de publication et mention de la délivrance du brevet:
**04.01.2017 Bulletin 2017/01**

(51) Int Cl.:
***G04B 17/32*** *(2006.01)*     ***G04B 31/00*** *(2006.01)*
***F16C 39/06*** *(2006.01)*

(21) Numéro de dépôt: **10190510.7**

(22) Date de dépôt: **09.11.2010**

(54) **Pivot magnétique et pivot électrostatique**

Magnetischer Drehzapfen und elektrostatischer Dhrerzapfen

Magnetic pivot and electrostatic pivot

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**09.05.2012 Bulletin 2012/19**

(73) Titulaire: **Montres Breguet SA**
**1344 L'Abbaye (CH)**

(72) Inventeurs:
• **Maréchal, Sylvain**
**39220, Bois-d'Amont (CH)**
• **Sarchi, Davide**
**1020, Renens (CH)**
• **Karlen, Olivier**
**1807, Blonay (CH)**
• **Todeschini, Arnaud**
**1343, Les Charbonnières (CH)**

(74) Mandataire: **Giraud, Eric et al**
**ICB**
**Ingénieurs Conseils en Brevets SA**
**Faubourg de l'Hôpital 3**
**2001 Neuchâtel (CH)**

(56) Documents cités:
DE-A1- 19 854 063    DE-B- 1 220 224
DE-U- 1 734 590    FR-A- 1 115 966
GB-A- 739 979    US-A- 3 496 780

## Description

Domaine de l'invention :

L'invention concerne un pivot magnétique comportant un composant horloger en matériau au moins partiellement perméable magnétiquement, ou au moins partiellement magnétique, et lequel composant comporte une première extrémité et une deuxième extrémité, ledit pivot magnétique comportant un dispositif de guidage en pivotement dudit composant horloger, lequel dispositif de guidage comporte, à une distance d'entrefer supérieure, de la valeur d'un jeu fonctionnel déterminé, à l'entraxe entre ladite première extrémité et ladite deuxième extrémité, une première surface d'une première masse polaire et une deuxième surface d'une deuxième masse polaire, lesdites première masse polaire et deuxième masse polaire étant agencées pour, ou bien être attirée chacune par un champ magnétique émis par une desdites première extrémité ou deuxième extrémité dudit composant, ou bien pour générer chacune un champ magnétique attirant une desdites première extrémité ou deuxième extrémité, de façon à ce que les forces d'attraction magnétiques s'exerçant sur ledit composant à ses dites première extrémité et deuxième extrémité soient d'intensité différente, de façon à attirer ledit composant par une de ses deux dites première extrémité ou deuxième extrémité, en contact direct ou indirect sur une seule desdites première surface ou deuxième surface.

L'invention concerne encore un mouvement d'horlogerie comportant au moins un tel pivot magnétique.

L'invention concerne encore une pièce d'horlogerie comportant au moins un tel mouvement d'horlogerie, ou/et au moins un tel pivot magnétique.

L'invention concerne encore un pivot électrostatique comportant un composant horloger en matériau au moins partiellement perméable électrostatiquement, ou au moins partiellement électrostatique, et lequel comporte une première extrémité et une deuxième extrémité.

L'invention concerne encore un mouvement d'horlogerie comportant au moins un tel pivot électrostatique.

L'invention concerne encore une pièce d'horlogerie comportant au moins un tel mouvement d'horlogerie, ou/et au moins un tel pivot électrostatique.

L'invention concerne le domaine de la micromécanique, et plus particulièrement le domaine de l'horlogerie.

Arrière-plan de l'invention :

La micromécanique, et en particulier la technique horlogère, utilise des solutions traditionnelles pour le positionnement de l'axe d'un composant, basées sur le frottement mécanique.

Dans l'application particulière à un composant pivotant incorporé dans un mouvement de montre, ou dans un oscillateur, un problème récurrent réside dans la forte dépendance du rendement et/ou du facteur de qualité du composant à la position de la montre dans laquelle ce composant est incorporé. En particulier le rendement et/ou le facteur de qualité est fortement inférieur quand une montre est en position verticale. Les solutions proposées pour résoudre ce problème privilégient souvent une diminution du rendement et/ou du facteur de qualité en position horizontale plutôt qu'une augmentation du rendement et/ou du facteur de qualité en position verticale.

Les problèmes à résoudre sont alors les suivants:

- l'égalisation du rendement et/ou du facteur de qualité dans toutes les positions de la montre,
- l'augmentation du rendement et/ou du facteur de qualité dans toutes les positions.

Le document DE 198 54 063 A1 au nom de JAGMANN VLADIMIR décrit un mobile en matériau magnétisable placé dans un entrefer entre deux masses polaires magnétiques générant un champ magnétique de direction perpendiculaire à l'attraction de la pesanteur, plus court que l'entrefer, portant sur une seule des masses polaires, et étant en semi-lévitation au voisinage de l'autre masse polaire. L'axe de pivotement du mobile est confondu avec un axe défini par les pôles des deux masses polaires.

Le document DE 12 20 224 B au nom de KERN & CO AG divulgue, de façon analogue, un mobile pivotant de la même façon, sans frottement dans un champ entre deux aimants. Ceux-ci présentent des extrémités rayonnées convexes en matériau dur, la surface d'appui du mobile sur une de ses extrémités rayonnées est aussi rayonnée convexe.

Le document FR 1 115 966 A au nom de JUNGHANS GEB AG décrit un régulateur à balancier rotatif, et utilise des champs magnétiques statiques pour réduire l'effet du poids de l'organe oscillant.

Un document DE 1 734 590 au nom de FRIEDRICH MAUTHE GmbH décrit également un dispositif magnétique d'allègement de la charge sur pivot.

Le document GB 739 979 A au nom de ROULEMENTS A BILLES MINIATURES divulgue un palier magnétique d'axe vertical pour un appareil de mesure tel qu'un galvanomètre. Toutefois, lors d'un choc angulaire ou radial, en l'absence d'un flux magnétique traversant l'arbre suspendu de cet appareil, l'extrémité inférieure de l'arbre s'éloigne de la masse magnétique inférieure, et l'extrémité conique supérieure de cet arbre ne peut que venir se fixer sur le cône magnétique supérieur, génératrice contre génératrice, et l'arbre reste alors complètement incliné.

Le document US 3 496 780 A au nom de CLAVELOUX NOEL décrit une suspension électrostatique pour des rotors de gyroscope obtenue avec une pluralité d'électrodes.

Résumé de l'invention :

L'invention se propose de pallier les problèmes de l'art antérieur, en mettant au point un procédé d'orientation d'un composant horloger, et plus précisément d'alignement de ce composant sur un axe de pivotement, permettant de réduire de façon drastique les frottements par rapport aux guidages mécaniques usuels, et, partant, d'améliorer l'indépendance de la qualité de fonctionnement d'un mouvement d'horlogerie par rapport à son orientation dans l'espace.

Pour y parvenir, l'invention met en oeuvre un dispositif de guidage en pivotement de ce composant, de façon à constituer un pivot magnétique de composants d'horlogerie permettant un rendement et/ou un facteur de qualité indépendant de la position.

A cet effet l'invention concerne un pivot magnétique comportant un composant horloger en matériau au moins partiellement perméable magnétiquement, ou au moins partiellement magnétique, et lequel composant comporte une première extrémité et une deuxième extrémité, ledit pivot magnétique comportant un dispositif de guidage en pivotement dudit composant horloger, lequel dispositif de guidage comporte, à une distance d'entrefer supérieure, de la valeur d'un jeu fonctionnel déterminé, à l'entraxe entre ladite première extrémité et ladite deuxième extrémité, une première surface d'une première masse polaire et une deuxième surface d'une deuxième masse polaire, lesdites première masse polaire et deuxième masse polaire étant agencées pour, ou bien être attirée chacune par un champ magnétique émis par une desdites première extrémité ou deuxième extrémité dudit composant, ou bien pour générer chacune un champ magnétique attirant une desdites première extrémité ou deuxième extrémité, de façon à ce que les forces d'attraction magnétiques s'exerçant sur ledit composant à ses dites première extrémité et deuxième extrémité soient d'intensité différente, de façon à attirer ledit composant par une de ses deux dites première extrémité ou deuxième extrémité, en contact direct ou indirect sur une seule desdites première surface ou deuxième surface, caractérisé en ce que la distance d'entrefer entre ladite première surface et ladite deuxième surface est dimensionnée de façon à assurer ledit jeu fonctionnel déterminé sur toute la plage de températures d'utilisation dudit dispositif de guidage et dudit composant, et en ce que ledit jeu fonctionnel déterminé est supérieur ou égal à 0,020 mm, et en ce que ledit composant comporte une partie arbrée qui s'étend entre sa dite première extrémité et sa dite deuxième extrémité, et en ce que, de part et d'autre de ladite première extrémité et de ladite deuxième extrémité, au niveau de ladite première et de ladite deuxième masse polaire, un premier champ magnétique et un deuxième champ magnétique de sens opposés, chacun de symétrie de révolution autour d'un axe de pivotement, tendent à aligner ledit composant selon ledit axe de pivotement et à attirer ledit composant vers sa dite masse polaire, la densité dudit premier champ magnétique au voisinage de ladite première extrémité étant supérieure à celle dudit deuxième champ magnétique au voisinage de ladite deuxième extrémité, de façon à attirer ladite première extrémité au contact de ladite première masse polaire, et encore caractérisé en ce que la densité de champ magnétique au voisinage de ladite première surface et de ladite deuxième surface est supérieure ou égale à 100000 A / m, et en ce que ledit dispositif de guidage en pivotement comporte des moyens de blindage agencés pour interdire l'action de tout champ magnétique à composante radiale par rapport audit axe de pivotement, au voisinage desdites première et deuxième surfaces de contact.

L'invention concerne encore un mouvement d'horlogerie comportant au moins un tel pivot magnétique.

L'invention concerne encore une pièce d'horlogerie comportant au moins un tel mouvement d'horlogerie, ou/et au moins un tel pivot magnétique.

L'invention concerne encore un pivot électrostatique comportant un composant horloger en matériau au moins partiellement perméable électrostatiquement, ou au moins partiellement électrostatique, et lequel comporte une première extrémité et une deuxième extrémité, caractérisé en ce que ledit pivot magnétique comporte un dispositif de guidage en pivotement dudit composant horloger comportant, à une distance d'entrefer supérieure, de la valeur d'un jeu fonctionnel déterminé, à l'entraxe entre ladite première extrémité et ladite deuxième extrémité, une première surface d'une première masse polaire et une deuxième surface d'une deuxième masse polaire, lesdites première masse polaire et deuxième masse polaire étant agencées pour, ou bien être attirée chacune par un champ électrostatique, émis par une desdites première extrémité ou deuxième extrémité, ou bien pour générer chacune un champ électrostatique, attirant une desdites première extrémité ou deuxième extrémité, de façon à ce que les forces d'attraction électrostatiques s'exerçant sur ledit composant à ses dites première extrémité et deuxième extrémité soient d'intensité différente, de façon à attirer ledit composant par une de ses deux dites première extrémité ou deuxième extrémité, en contact direct ou indirect sur une seule desdites première surface ou deuxième surface.

L'invention concerne encore un mouvement d'horlogerie comportant au moins un tel pivot électrostatique.

L'invention concerne encore une pièce d'horlogerie comportant au moins un tel mouvement d'horlogerie, ou/et au moins un tel pivot électrostatique.

Description sommaire des dessins :

D'autres caractéristiques et avantages de l'invention seront mieux comprises à la lecture de la description détaillée qui va suivre, en référence aux dessins annexés, où :

- la figure 1 représente, de façon schématisée et en élévation, un dispositif de guidage d'un composant selon l'invention ;
- la figure 2 représente, de façon similaire à la figure 1, un composant destiné à être incorporé dans un pivot magnétique selon l'invention ;
- la figure 3 représente, de façon similaire à la figure 1, un pivot magnétique selon l'invention comportant le dispositif de la figure 1 et le composant de la figure 2 dans une position de coopération stable ;
- la figure 4 représente, de façon similaire à la figure 1, un pivot magnétique selon l'invention, faisant apparaître le système de forces agissant sur le composant ;
- la figure 5 représente, de façon similaire à la figure 4, le système de forces agissant sur le composant représenté dans une position provoquée instable ;
- la figure 6 représente, en coupe longitudinale selon son axe de pivotement, un pivot magnétique selon l'invention comportant un dispositif de guidage d'un composant selon l'invention, dans un premier mode de réalisation;
- la figure 7 représente, de façon similaire à la figure 6, un pivot magnétique un autre mode de réalisation;
- la figure 8 représente, de façon schématisée, partielle et en perspective, une pièce d'horlogerie comportant un mouvement incorporant un pivot magnétique selon l'invention, notamment selon les modes de réalisation des figures 6 ou 7 ;
- la figure 9 représente un composant constitué par un balancier, inséré dans un dispositif de guidage d'un composant selon l'invention ;
- la figure 10 représente, de façon schématisée, le rapport des forces agissant sur un composant ;
- la figure 11 représente un diagramme de croissance de la densité de force magnétique résultante en fonction de l'abscisse selon l'axe longitudinal de la figure 10 ;
- la figure 12 représente, de façon schématisée et en élévation, un exemple, utile à la compréhension de l'invention, de dispositif de masses magnétiques reliées par des moyens de couplage magnétique, avec un mobile en cours de transit entre les masses polaires, dans une position intermédiaire.

Description détaillée des modes de réalisation préférés :

L'invention met au point un procédé particulier d'orientation pour son guidage en pivotement d'un composant horloger, et plus précisément d'alignement de ce composant sur un axe de pivotement.

Le but est de procurer une alternative aux pivots traditionnels, et de réduire de façon drastique les frottements par rapport aux guidages mécaniques usuels, et, partant, d'améliorer l'indépendance de la qualité de fonctionnement d'un mouvement d'horlogerie par rapport à son orientation dans l'espace.

Pour mettre en oeuvre ce procédé, l'invention concerne encore un dispositif de guidage en pivotement de ce composant, de façon à constituer un pivot magnétique de composants d'horlogerie permettant un rendement et/ou un facteur de qualité indépendant de la position.

L'invention est de portée très large, elle concerne, sans exclusive, tous les domaines de la mécanique. Du fait de certaines caractéristiques particulières qui seront exposées plus loin, notamment l'emploi préférentiel de forces magnétiques de grande intensité par rapport aux forces de pesanteur, l'invention trouve plus facilement son application dans le domaine de la micromécanique, et plus particulièrement le domaine de l'horlogerie, pour lequel elle a été développée, et a fait l'objet de prototypes fonctionnels.

L'invention propose d'améliorer les conditions de pivotement d'un composant, en réduisant les frottements par rapport à l'art antérieur, et en alignant en permanence son axe principal d'inertie, appelé ci-après pour simplifier axe longitudinal, sur un axe de pivotement théorique. Naturellement l'invention est applicable aussi à des composants non équilibrés, ou pivotant autour d'un autre axe que leur axe principal d'inertie, mais l'invention apport ses plus grands avantages dans ce cas préféré où l'axe principal d'inertie du composant doit être confondu avec l'axe de pivotement.

Le composant peut ainsi être, de façon nullement limitative, un balancier, un ensemble balancier-spiral, une roue d'échappement, une ancre, une roue de rouage, un rochet, un cliquet, une bascule, un barillet, un rotor de remontage automatique, un disque de quantième ou de phase de lune, un marteau, un coeur, une roue à colonnes, ou tout autre composant usuellement mobile en pivotement.

L'invention réalise un système axe-pivots d'un tel composant par des forces magnétiques.

Dans la suite de l'exposé, on définit par matériaux « perméables magnétiquement », des matériaux qui ont une perméabilité relative comprise entre 100 et 10000, comme des aciers, qui ont une perméabilité relative voisine de 100 pour des axes de balanciers par exemple, ou voisine de 4000 pour les aciers utilisés couramment dans les circuits électriques, ou encore d'autres alliages dont la perméabilité relative atteint des valeurs de 8000 à 10000.

On appellera matériaux « magnétiques », par exemple dans le cas de masses polaires, des matériaux aptes à être aimantés de façon à présenter un champ rémanent compris entre 0.1 et 1.5 Tesla, comme par exemple le « Neodymium Iron Boron » d'une densité d'énergie magnétique Em voisine de 512 kJ/m$^3$ et donnant un champ rémanent de 0.5 à 1.3 Tesla. Un niveau de champ rémanent inférieur, vers la partie inférieure de la fourchette peut être utilisé en cas de combinaison, dans un couple d'aimantation, d'un tel matériau magnétique avec un composant antagoniste perméable magnétiquement de perméabilité élevée, plus proche de 10000, dans la fourchette de 100 à 10000.

On appellera matériaux « paramagnétiques » des matériaux de perméabilité magnétique relative comprise entre 1.0001 et 100, par exemple pour des entretoises interposées entre un matériau magnétique et un composant antagoniste perméable magnétiquement, ou encore entre deux matériaux magnétiques, par exemple une entretoise entre un composant et une masse polaire.

On appellera matériaux «diamagnétiques » des matériaux de perméabilité magnétique relative inférieure à 1.

On appellera enfin matériaux «magnétiques doux», pour ne pas dire amagnétiques, notamment pour des blindages, des matériaux ayant une perméabilité élevée mais haute saturation, car on ne veut pas qu'ils soient aimantés de manière permanente: ils doivent conduire le mieux possible le champ, de manière à réduire le champ à leur extérieur. De tels composants peuvent alors protéger aussi un système magnétique des champs externes. Ces matériaux sont choisis de préférence de perméabilité magnétique relative comprise entre 50 et 200, et avec un champ de saturation supérieur à 500 A/m.

Des matériaux qualifiés d'«amagnétiques », ont quant à eux une perméabilité magnétique relative très légèrement supérieure à 1, et inférieure à 1.0001, comme typiquement le silicium, le diamant, le palladium et similaires. Ces matériaux peuvent en général être obtenus par des technologies MEMS ou par le procédé « LIGA ».

Pour parvenir à garantir un rendement et un facteur de qualité élevés dans toutes les positions d'une pièce d'horlogerie, il faut réussir à minimiser les effets de l'attraction de la pesanteur. Il est possible, pour les dimensions horlogères typiques et en utilisant des micro-aimants commerciaux, de générer des forces magnétiques supérieures à la force de gravité et au couple agissant sur le composant pendant le fonctionnement. Un système régi par des forces magnétiques est beaucoup moins sensible à la gravité, et donc aux changements de position de la montre, que les systèmes mécaniques traditionnels.

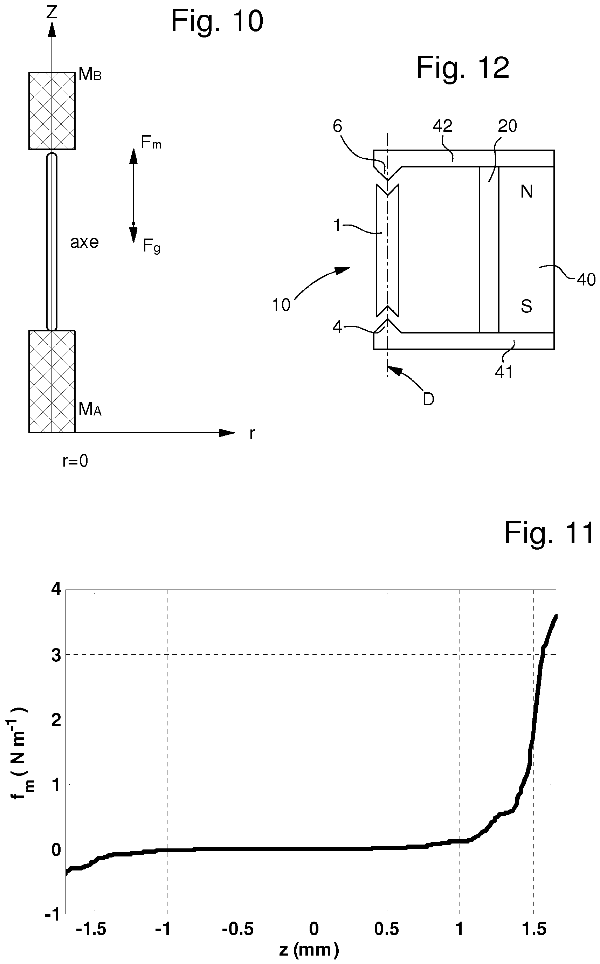

Une première construction, tel que visible sur la figure 10, consiste à introduire des masses polaires, de préférence constituées par un ou plusieurs micro-aimants dans les pivotements du composant, réglés pour magnétiser l'axe, par exemple réalisé en matériau magnétique doux, que comporte le composant, et produire ainsi une force d'attraction magnétique entre les paliers et l'axe du composant.

L'application horlogère préférée et décrite ici incite à utiliser des aimants permanents pour la constitution des masses polaires utilisées par l'invention, mais il et évident que pour d'autres applications, notamment statiques, l'emploi d'électro-aimants est également possible. L'emploi du terme « aimant» dans la suite de l'exposé désigne de façon générale une masse polaire magnétisée.

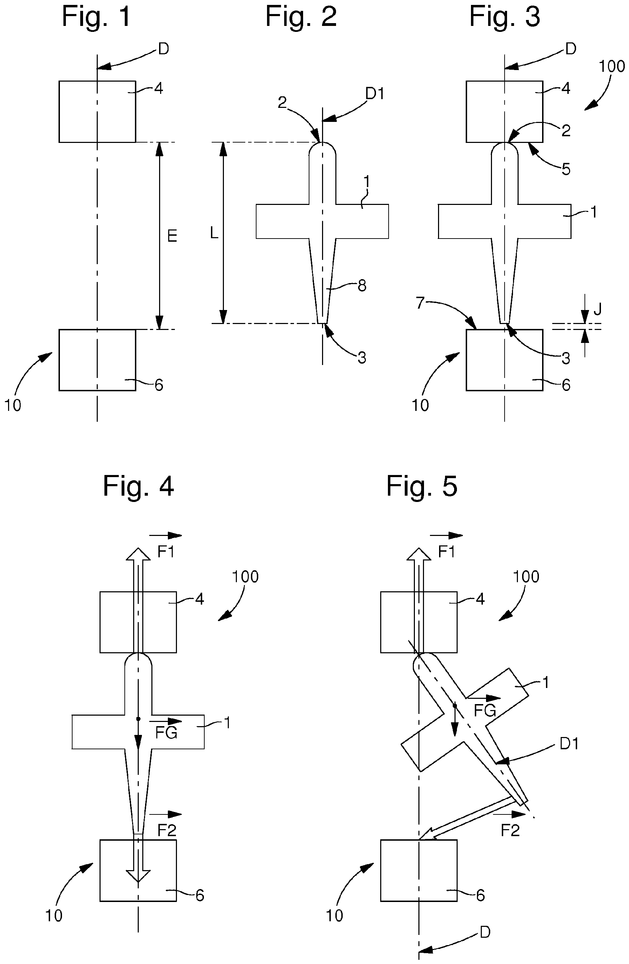

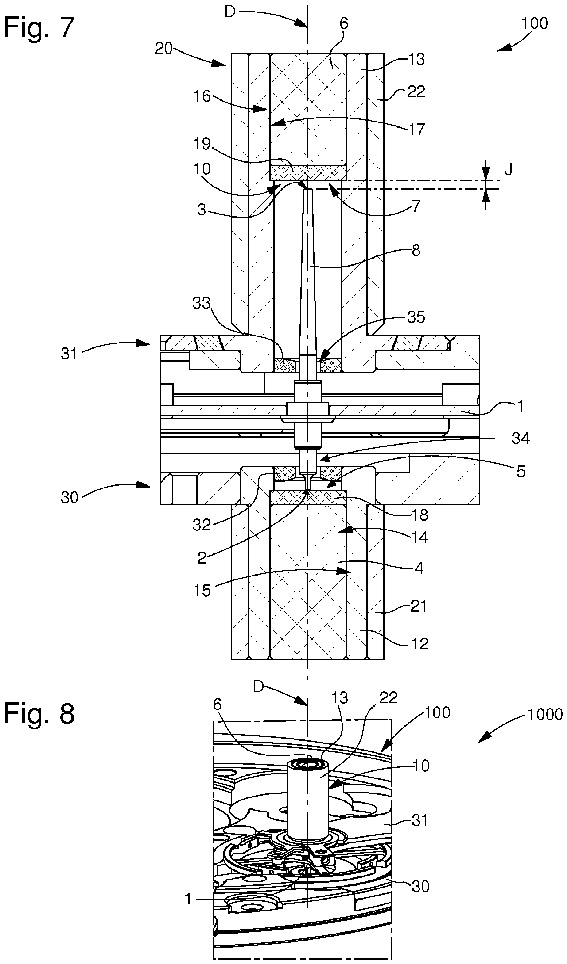

La figure 10 est un schéma de principe bidimensionnel à symétrie axiale d'une réalisation de composant, par exemple un balancier, magnétique: l'axe longitudinal défini par une première extrémité et une deuxième extrémité du composant en matériau magnétisable ou encore magnétique, se trouve entre deux aimants permanents $M_A$ et $M_B$, dont la polarisation magnétique est dirigée selon une direction z qui est l'axe de pivotement théorique du composant, et sur laquelle il s'agit d'aligner l'axe longitudinal du composant. On appellera ci-après « axe du composant » une partie arbrée de ce composant 1 qui s'étend entre la première extrémité 2 et la deuxième extrémité 3 de celui-ci. L'appui de l'axe du composant 1 peut être garanti, ou bien directement sur ce ou ces aimants, ou par deux pierres interposées entre les aimants et l'axe du composant, ou par un traitement de surface des aimants. Tel que visible sur la figure 7 d'une réalisation particulière, l'axe du composant 1 peut ainsi se faire sur une entretoise 18 équipant la première masse polaire 4, la deuxième masse polaire 6 pouvant aussi comporter une telle entretoise 19. Ces entretoises doivent laisser passer le champ magnétique, elles ont essentiellement un rôle tribologique pour celle qui constitue une face d'appui, et de protection des masses polaires en cas de choc. Les figures 3, 4, et 6 illustrent un appui direct du composant 1 sur une première masse polaire 4, et la possibilité d'un appui intermittent, par exemple lors du montage ou en cas de choc, cet appui étant également direct, sur une deuxième masse polaire 6. La taille et/ou l'énergie magnétique des aimants et la longueur de l'axe du composant sont optimisés pour maximiser la force d'attraction $F_m$ entre l'axe et un des deux aimants $M_B$:

Selon l'invention, la force d'attraction $F_m$ est beaucoup supérieure à la force de gravité $F_g$, de préférence au moins dans un rapport de 10 à 1, et l'axe appuie de façon stable sur un seul des deux aimants pour toutes les positions de la pièce d'horlogerie ou de la montre. Les deux forces appliquées sur le centre de gravité du composant sont schématisées dans le cas où $F_g$ est opposée à $F_m$.

Un couple magnétique de rappel agit sur l'axe quand l'axe est dévié de la direction z: la géométrie est optimisée pour que le couple de rappel magnétique soit supérieur au couple produit par la force de gravité et au couple admis au composant pour stabiliser l'orientation de l'axe dans la direction z.

La force magnétique qui agit sur l'axe magnétisé est proportionnelle à son aimantation $M_{axe}(r,z)$ et au gradient du champ magnétique H produit par les deux aimants :

$$\vec{F}_m = \mu_0 \int_{V_{axe}} d\vec{r}\ \vec{M}_{axe} \cdot \vec{\nabla} H$$

où l'intégration est faite sur le volume de l'axe $V_{axe}$.

Cette relation permet d'optimiser la taille et/ou l'énergie magnétique des aimants et la géométrie de l'axe du composant, pour maximiser la force d'attraction entre l'axe et un des deux aimants, $M_B$ dans le cas de la figure 10. Par conséquent, l'axe appuie sur un seul des deux aimants dans toutes les positions.

La force d'attraction étant supérieure à la force de gravité et à la force maximale appliquée sur le composant, cette configuration est stable.

L'invention améliore avantageusement l'efficacité des solutions antichoc traditionnelles, qui sont donc avantageusement intégrables dans cette invention, parce qu'elle garantit que l'axe soit ramené dans la position d'équilibre correcte après un choc, les pivotements mécaniques traditionnels ne le garantissant pas. L'aimant supérieur a la fonction de stabiliser l'orientation de l'axe. En fait, le couple magnétique agissant sur l'axe est donné par :

$$\vec{C}_m = -\mu_0 \int d\vec{r}\, \vec{M}_{axe} \times \vec{H}$$

Et ce couple magnétique est nul seulement si l'axe est orienté comme les lignes de champ, donc dans la direction z. Si l'orientation de l'axe est perturbée et s'écarte de la direction z, le couple de rappel $C_m$ permet le recentrage dans la position d'équilibre.

La figure 11 illustre la densité de force magnétique sur l'axe du composant, en l'occurrence un balancier de montre dans le cas d'espèce, pour des paramètres réels. La force magnétique résultante est $F_m = 10$ mN, dirigée vers l'aimant $M_B$, donc un ordre de grandeur plus grand que celui de la force de gravité, et créant un couple supérieur au couple maximal appliqué sur le composant par son environnement.

L'invention présente l'avantage de fortement confiner le champ magnétique à l'intérieur de l'axe du composant, les lignes de champ sont pratiquement parallèles à la direction z. La densité de force magnétique résultante pour des paramètres réels est montrée en figure 11. Puisque la composante positive, correspondante à une force dans la direction de $M_B$, est plus importante, la force nette qui agit sur le balancier est dirigée vers $M_B$.

Puisque la force agissant sur l'axe ne dépend que faiblement de la position de l'axe sur la surface d'appui, le champ étant sensiblement homogène dans le centre de la surface des aimants, l'axe est libre de tourner autour de z, sans frottement additionnel. Donc la dissipation d'énergie engendrée par l'oscillation du composant est fortement réduite à l'instar du frottement mécanique: le rendement et/ou le facteur de qualité peuvent être augmentés dans toutes les positions.

Dans une configuration alternative, l'axe du composant peut être lui-même un aimant permanent, soit entourée de masses polaires en matériau magnétisable, soit elles-mêmes magnétisées, ce qui maximise alors les forces et couples magnétiques en présence, et minimise d'autant plus l'influence de la pesanteur.

Dans une configuration alternative, l'axe et/ou la planche du composant peut être composé par un matériau diamagnétique, par exemple en graphite pyrolytique, et le pivotement être composé par plusieurs aimants alternés, pour permettre une lévitation diamagnétique et le positionnement du composant.

Les avantages découlant des caractéristiques de l'invention sont nombreux.

- le rendement et/ou le facteur de qualité du composant est identique dans toutes les positions de la pièce d'horlogerie, avec des variations inférieures à 5 % ;
- le rendement et/ou le facteur de qualité est augmenté dans toutes les positions par rapport à l'emploi de pivots traditionnels ;
- dans le cas où le composant est oscillant, notamment un balancier, son amplitude d'oscillation est augmentée et identique dans toutes les positions;
- les frottements et la dissipation d'énergie sont minimisés ainsi que les variations de couple ;
- le nombre de constituants est limité comparé à d'autres solutions;
- l'invention est antichoc de par sa construction;
- le système peut être intégré à d'autres éléments magnétiques.
- l'invention est facile à intégrer dans tout type de pièce d'horlogerie ou de montre, notamment mécanique, qu'elle soit simple ou à complications, ou dans tout appareil scientifique portable, ou similaire.

Une variante d'exécution de l'invention avec des aimants non-alignés peut présenter un intérêt dans certains cas de figure, en particulier pour des composants pour lesquels l'effet du couple parasite est négligeable et pour lesquels une configuration non-alignée est plus simple à réaliser, en raison de la forme ou position du composant

Pour un composant générique, il faut aussi considérer que l'invention permet aussi, avantageusement, l'utilisation d'axes courbes : dans ce cas, une direction différente des deux aimants est obligatoire.

Quand les lignes de champ des deux aimants ne sont pas alignées, le système recherche une position d'équilibre suffisamment stable. Si les deux directions ne sont pas trop différentes, l'axe longitudinal du composant peut rester dans un régime dynamique indéfiniment, en passant d'une position instable à une autre position instable. Toutefois, un désalignement a pour effet de réduire la force magnétique appliquée sur le composant, et, surtout, le couple de rappel. De ce fait, la stabilité est alors moindre que dans le cas préféré de lignes de champ alignées. Quand le composant fait partie d'un oscillateur, le désalignement est à éviter, car il introduirait un couple magnétique radial ayant un effet parasite sur la marche.

Il est possible d'imaginer différentes variantes d'un pivot magnétique selon l'invention, selon la constitution et les propriétés magnétiques du composant: le fait d'avoir un axe en matériau homogène permet de fermer facilement les lignes de champ. Une faible inhomogénéité dans la direction longitudinale, associée à des variations de densité, de section ou de concentrations de l'alliage, peut être utilisée pour augmenter volontairement l'asymétrie de la force, et donc augmenter la force d'attraction sur une des deux cotés. Le matériau du composant, du moins au niveau des première et deuxième extrémités, est de préférence ferromagnétique, car un matériau paramagnétique produirait une force trop faible.

Il est, encore, possible d'intercaler une région amagnétique, c'est-à-dire à très faible perméabilité magnétique, entre des régions magnétiques lesquelles sont situées aux première et deuxième extrémités, si celles-ci sont aimantées de manière permanente: cette disposition permet d'avoir quand même une force et un couple suffisamment grands.

Les figures 1 à 10 illustrent la réalisation de l'invention.

L'invention concerne un procédé d'orientation pour son guidage en pivotement d'un composant 1 horloger en matériau au moins partiellement perméable magnétiquement, respectivement électrostatiquement, ou au moins partiellement magnétique, respectivement électrostatiques, et comportant une première extrémité 2 et une deuxième extrémité 3.

Selon l'invention, on crée de part et d'autre de ses première extrémité 2 et deuxième extrémité 3 deux champs magnétiques, respectivement électrostatiques, tendant chacun à attirer le composant 1 sur une masse polaire 4, 6, et on crée un déséquilibre entre les champs magnétiques, respectivement électrostatiques, autour du composant 1 de manière à créer un différentiel de forces sur ce dernier pour plaquer une de ses extrémités 2, 3 sur une surface de contact 5, 7 d'une de ces masses polaires 4, 6, et pour maintenir l'autre de ses extrémités 3, 2 à distance d'une surface de contact 7, 5 que comporte l'autre masse polaire 6, 4.

Dans une première variante préférée, on crée de part et d'autre de ses première extrémité 2 et deuxième extrémité 3 les deux champs magnétiques sensiblement de même direction et de même sens. Cette première variante s'applique en particulier pour un composant dont l'axe est conducteur et magnétisable depuis sa première extrémité 2 jusqu'à sa deuxième extrémité 3, et c'est ainsi que la densité de champ magnétique se concentre le mieux autour de l'axe de pivotement D.

Dans une autre variante, on crée de part et d'autre de sa première extrémité 2 et de sa deuxième extrémité 3 les deux champs magnétiques sensiblement de même direction et de sens opposés. Cette autre variante s'applique quand il y a une discontinuité électrique ou/et magnétique entre la première extrémité 2 et la deuxième extrémité 3, par exemple si un composant à très faible perméabilité magnétique comporte uniquement deux demi-arbres perméables magnétiquement ou magnétiques à ses extrémités 2 et 3. Naturellement, la configuration de champs de la première variante est aussi applicable à ce cas. Une variante également réalisable est celle où le composant 1 est monobloc, et où la discontinuité est réalisée par un procédé de fabrication particulier, par traitement de surface par exemple.

Dans une exécution particulière et préférée dans le cas où le composant est un balancier ou un organe d'oscillateur, on crée de part et d'autre de sa première extrémité 2 et de sa deuxième extrémité 3 les deux champs magnétiques de même direction.

Dans la variante illustrée par les figures, selon l'invention, on oriente le composant horloger 1 sur un axe de pivotement D défini par l'agencement des deux champs magnétiques et de leurs masses polaires respectives 4, 6, et on génère de part et d'autre de la première extrémité 2 et de la deuxième extrémité 3, au niveau d'une première 4 et d'une deuxième masse polaire 6, un premier champ magnétique et un deuxième champ magnétique de sens opposés, chacun de symétrie de révolution autour du axe de pivotement D et tendant à attirer le composant 1 vers sa masse polaire 4, 6. La densité du premier champ magnétique au voisinage de la première extrémité 2 est choisie supérieure à celle du deuxième champ magnétique au voisinage de la deuxième extrémité 3, de façon à attirer la première extrémité 2 au contact de la première masse polaire 4. On définit encore l'entrefer E des masses polaires 4, 6 supérieur, de la valeur d'un jeu fonctionnel déterminé J, à l'entraxe L entre la première extrémité 2 et la deuxième extrémité 3.

L'invention concerne encore un dispositif 10 de guidage en pivotement d'un composant 1 horloger, convenant notamment à la mis en oeuvre de ce procédé d'orientation pour son guidage en pivotement. Ce composant 1 doit être en matériau au moins partiellement perméable magnétiquement ou au moins partiellement magnétique, et comporte une première extrémité 2 et une deuxième extrémité 3.

Selon l'invention, le dispositif 10 comporte, à une distance d'entrefer E supérieure, de la valeur d'un jeu fonctionnel déterminé J, à l'entraxe L entre la première extrémité 2 et la deuxième extrémité 3 une première surface 5 d'une première masse polaire 4 et une deuxième surface 7 d'une deuxième masse polaire 6.

Ces masses polaires 4 et 6 sont agencées pour, ou bien être attirée chacune par un champ magnétique émis par une des première extrémité 2 ou deuxième extrémité 3 du composant 1, ou bien pour générer chacune un champ magnétique attirant une des première extrémité 2 ou deuxième extrémité 3 du composant 1, de façon à ce que les forces d'attraction magnétiques s'exerçant sur le composant 1 à ses deux extrémités 2, 3 soient d'intensité différente, de façon à attirer le composant 1 par une de ses deux extrémités 2, 3, en contact direct ou indirect sur une seule des surfaces 5, 7 des masses polaires 4, 6.

Selon l'invention la première masse polaire 4 et la deuxième masse polaire 6 sont chacune en matériau magnétique, ou perméable magnétiquement, et sont magnétiques si le composant 1 ne l'est pas. La première masse polaire 4 et la deuxième masse polaire 6 définissent ensemble un axe de pivotement D sur lequel est aligné un axe longitudinal D1 du composant 1 joignant les première extrémité 2 et deuxième extrémité 3 de ce dernier, lorsque le composant 1 est inséré entre les première masse polaire 4 et deuxième masse polaire 6.

Selon l'invention, la première masse 4, respectivement la première extrémité 2, génère au voisinage de la première surface 5 un premier champ magnétique selon l'axe de pivotement D tendant à rapprocher la première masse 4 de la première extrémité 2, et de densité supérieure à la densité d'un deuxième champ magnétique selon l'axe de pivotement D généré au voisinage de la deuxième surface 7 par la deuxième masse 6, respectivement la deuxième extrémité 3, le deuxième champ magnétique tendant à rapprocher la deuxième masse 6 de la deuxième extrémité 3, de façon à ce que la première extrémité 2 soit maintenue en contact avec la première surface 5, et à ce que l'axe longitudinal D1 du composant 1 soit confondu avec l'axe de pivotement D, la deuxième extrémité 3 restant alors à distance de la deuxième surface 7.

Avantageusement la distance d'entrefer E entre la première surface 5 et la deuxième surface 7 est dimensionnée de façon à assurer le jeu fonctionnel déterminé J sur toute la plage de températures d'utilisation du dispositif de guidage 10 et du composant 1. Ce jeu est strictement positif, ce qui exclut serrage ou frottement gras. De préférence, ce jeu fonctionnel déterminé J est supérieur ou égal à 0,020 mm.

De préférence, le choix de la perméabilité magnétique du matériau du composant 1, et la détermination de l'aimantation, selon le cas, de la première masse 4 et de la deuxième masse 6 d'une part, ou/et du composant 1 d'autre part, sont effectués de façon à ce que le premier champ magnétique et le deuxième champ magnétique exercent sur le composant 1 des forces d'attraction au moins supérieures de 30% à la force d'attraction de la pesanteur sur le composant 1, et de préférence supérieures à cinq à dix fois la force d'attraction de la pesanteur sur le composant 1 pour obtenir le meilleur comportement lors du mouvement de la pièce d'horlogerie.

De la même façon, la perméabilité magnétique du matériau du composant 1 et la détermination de l'aimantation, selon le cas, de la première masse 4 et de la deuxième masse 6 d'une part, ou/et du composant 1 d'autre part, sont effectués de façon à ce que le premier champ magnétique et le deuxième champ magnétique exercent sur le composant 1 des couples d'attraction supérieurs à dix fois au couple d'attraction de la pesanteur sur le composant 1, dans toutes les positions de ce dernier.

De préférence la densité de champ magnétique au voisinage de la première surface 5 et de la deuxième surface 7 est supérieure ou égale à 100000 A/m.

Avantageusement le dispositif 10 comporte des moyens de blindage 20, en matériaux magnétiques doux, qui sont agencés pour interdire l'action de tout champ magnétique à composante radiale par rapport à l'axe de pivotement D, au voisinage des première 5 et deuxième 7 surfaces de contact.

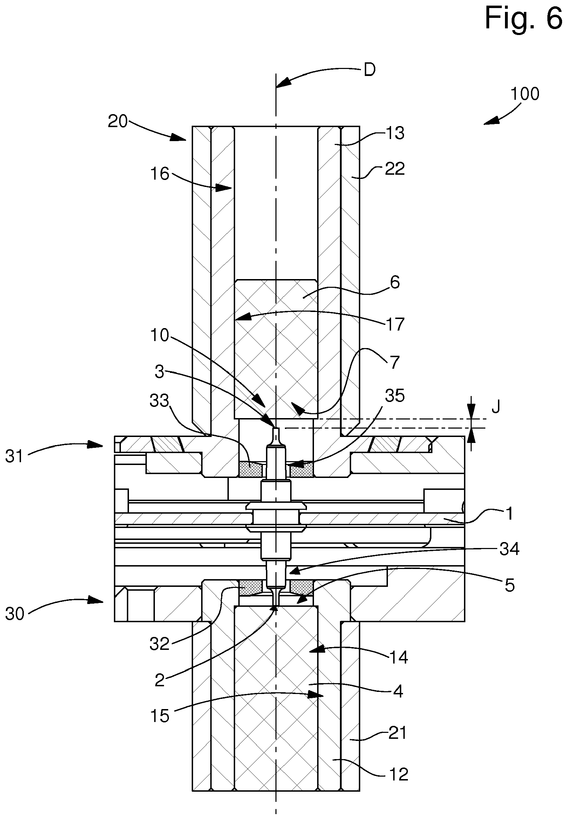

Par exemple, ces moyens de blindage 20 comportent au moins une partie tubulaire 21, 22 axée sur l'axe de pivotement D et entourant la première masse 4 et la deuxième masse 6, et au moins la deuxième extrémité 3 du composant 1, tel que visible sur les figures 6, 7 et 8.

Les figures 3, 4, et 6 illustrent un appui direct du composant 1 sur la surface 5 de la première masse polaire 4, la figure 7 illustre un appui indirect où la première extrémité 2 du composant 1 est en appui sur une surface 5 qui appartient à une entretoise 18, elle-même en appui sur la première masse polaire 4, ou à proximité immédiate de celle-ci, de façon à ne pas réduire l'effet du champ d'attraction, magnétique ou électrostatique selon le cas, exercé entre le composant 1 et la masse polaire 4. De la même façon, en cas d'utilisation d'entretoises 18, 19, ou de traitements de surface sur les surfaces 5 et 7 des masses polaires 4 et 6, il convient de choisir les matériaux de ces entretoises ou de ces traitements, les procédés de traitement, et le dimensionnement, surtout en épaisseur, de façon à ne pas réduire l'effet du champ d'attraction, magnétique ou électrostatique selon le cas, exercé entre la première extrémité 2 du composant 1 et la masse polaire 4 d'une part, et entre la deuxième extrémité 3 du composant 1 et la deuxième masse polaire 6 d'autre part.

De préférence, au moins la première surface 5 comporte un revêtement dur ou est constituée par une surface dure d'une entretoise 18, laquelle est interposée entre la première masse 4 et le composant 1. Une entretoise similaire 19 peut être interposée entre la deuxième masse 6 et le composant 1

Le dispositif 10 comporte encore, avantageusement des moyens de bouclage de champ magnétique entre la première masse 4 et la deuxième masse 6, par exemple par une bride externe. La figure 12 montre la première masse polaire 4 magnétiquement solidaire d'un premier bras 41 en matériau ferromagnétique, la deuxième masse polaire 6 magnétiquement solidaire d'un deuxième bras 42 en matériau ferromagnétique, lequel est plaqué sur un pôle d'une source magnétique 40, aimant ou similaire, le premier bras 41 étant plaqué sur l'autre pôle de cette source magnétique 40. Les moyens de blindage 20 sont alors interposés entre la source magnétique 40 et le domaine de coopération du composant 1 et des masses polaires 4 et 6 selon la direction D. Cette configuration peut s'appliquer dans tous les cas considérés: composant 1 perméable magnétiquement et masses polaires 4 et 6 magnétiques, composant 1 magnétique et masses polaires 4 et 6 perméables magnétiquement, composant 1 magnétique et masses polaires 4 et 6 magnétiques. Ce transfert du champ, ici représenté comme latéral, mais qui peut occuper toute autre configuration dans l'espace, notamment en fonction du volume disponible dans un mouvement horloger ou dans une pièce d'horlogerie, permet de transférer vers la direction de pivotement D un champ émis à distance de cette zone. Il offre l'avantage de permettre un dimensionnement très supérieur des sources de champ, qu'elles soient de nature magnétique ou électrostatique.

Dans un autre mode de réalisation, l'attraction entre les masses polaires 4, 6, et le composant 1 est de nature électrostatique. La conception décrite ici pour une attraction magnétique reste valable. Toutefois il est plus difficile d'assurer une charge électrostatique suffisante pour obtenir des forces et couples électrostatiques très supérieurs aux forces et couples de pesanteur et issus du mécanisme avec lequel coopère le composant 1.

Dans un autre mode de réalisation, l'attraction entre les masses polaires 4, 6, et le composant 1 est de nature électrostatique. La notion de permittivité relative ou constante diélectrique se substitue alors à la notion de perméabilité magnétique, et la notion de champ électrostatique se substitue à celle de champ magnétique. La construction du dispositif antichoc 10 est entièrement similaire, et est dimensionnée en fonction des champs électrostatiques permanents établis entre le composant 1 et les masses polaires 4 et 6.

Dans cette version, le dispositif antichoc 10 concerne la protection d'un composant horloger 1 en matériau au moins partiellement conducteur ou au moins partiellement électrisé à une première extrémité 2 et à une deuxième extrémité 3. Selon l'invention, ce dispositif antichoc 10 comporte, de part et d'autre desdites première 2 et deuxième 3 extrémités, à une distance d'entrefer supérieure, de la valeur d'un jeu fonctionnel déterminé J, à l'entraxe entre la première extrémité 2 et la deuxième extrémité 3, une première surface 5 d'une première masse polaire 4 et une deuxième surface 7 d'une deuxième masse polaire 6, lesquelles masses polaires 4 ; 6 sont agencées pour, ou bien être attirée chacune par un champ électrostatique émis par une des première extrémité 2 ou deuxième extrémité 3 du composant 1, ou bien pour générer chacune un champ électrostatique attirant une des première extrémité 2 ou deuxième extrémité 3 du composant 1, de façon à ce que les forces d'attraction électrostatiques s'exerçant sur le composant 1 à ses deux extrémités 2, 3 soient d'intensité différente, de façon à attirer le composant 1 par une de ses deux extrémités, en contact direct ou indirect sur une seule des surfaces 5, 7 des masses polaires 4 , 6. La première masse polaire 4 et la deuxième masse polaire 6 sont chacune mobile dans une chambre entre deux butées 41, 42 respectivement 43, 44.

En somme, dans ce mode faisant appel à des forces et couples électrostatiques, il est possible d'utiliser un matériau conducteur, soit pour le composant 1 si les masses polaires 4 et 6 sont électrisées et chargées avec une énergie suffisante, soit pour les masses polaires 4 et 6 si c'est le composant 1 qui est électrisé et chargé, ce matériau conducteur est polarisé par induction grâce aux pièces qui sont chargées de manière permanente.

Une variante similaire est obtenue avec l'utilisation d'un diélectrique, isolant ou semi-conducteur, à la place d'un conducteur, la polarisation est alors limitée à la surface du diélectrique, et la force et le couple d'attraction sont inférieurs à ceux développés quand le matériau est conducteur, mais permettent encore cette utilisation dans le cas d'une montre.

Il est encore possible, dans un autre mode de réalisation, de cumuler l'action de forces et couples électrostatiques et de forces et couples magnétiques.

L'invention concerne encore un pivot magnétique, respectivement électrostatique, 100 comportant un tel composant horloger 1 en matériau au moins partiellement perméable magnétiquement, respectivement électrostatiquement, ou au moins partiellement magnétique, respectivement électrostatique, et lequel comporte une première extrémité 2 et une deuxième extrémité 3.

Ce pivot magnétique 100 comporte un dispositif 10 de guidage en pivotement du composant horloger 1 comportant, à une distance d'entrefer E supérieure, de la valeur d'un jeu fonctionnel déterminé J, à l'entraxe L entre la première extrémité 2 et la deuxième extrémité 3, une première surface 5 d'une première masse polaire 4 et une deuxième surface 7 d'une deuxième masse polaire 6. Ces masses polaires 4 ; 6 sont agencées pour, ou bien être attirée chacune par un champ magnétique, respectivement électrostatique, émis par une des première extrémité 2 ou deuxième extrémité 3 du composant 1, ou bien pour générer chacune un champ magnétique, respectivement électrostatique, attirant une des première extrémité 2 ou deuxième extrémité 3 du composant 1, de façon à ce que les forces d'attraction magnétiques, respectivement électrostatiques s'exerçant sur le composant 1 à ses deux extrémités 2, 3 soient d'intensité différente, de façon à attirer le composant 1 par une de ses deux es extrémités 2, 3, en contact direct ou indirect sur une seule des surfaces 5, 7 des masses polaires 4, 6.

De préférence, ce pivot magnétique 100 comporte un dispositif de guidage 10 tel que décrit ci-dessus, dans l'une de ses variantes. Il comporte encore un composant 1 comportant une partie sensiblement arbrée en matériau au moins perméable magnétiquement, respectivement électrostatiquement, ou au moins magnétique, respectivement électrostatique, s'étendant entre une première extrémité 2 et une deuxième extrémité 3 définissant ensemble un axe longitudinal D1. Le dispositif de guidage 10 comporte des moyens d'accès pour l'insertion du composant 1 dans l'entrefer. Ou bien le dispositif de guidage 10 est réalisé démontable en plusieurs parties comportant des moyens de coopération entre eux ou/et avec un pont 31 ou/et une platine 30 pour permettre le montage du composant 1 en appui par sa première extrémité 2 sur une première partie comportant la première surface 5 et la première masse 4, préalablement au montage d'une deuxième partie comportant la deuxième surface 7 et la deuxième masse 6.

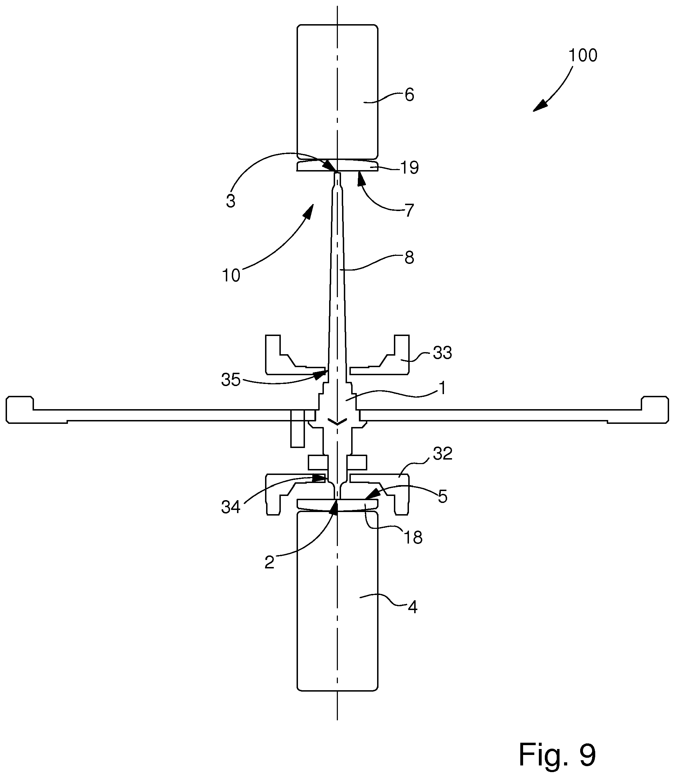

De façon particulièrement avantageuse, tel que visible sur les figures 8 et 9, le composant 1 présente une partie fuselée 8, de révolution autour de l'axe longitudinal D1, et de section dégressive depuis le centre de gravité du composant 1 vers la deuxième extrémité 3, de façon à améliorer le gradient de champ magnétique au voisinage de la deuxième surface 7, et à faciliter le centrage de la deuxième extrémité 3 sur l'axe de pivotement D.

Quand le pivot magnétique 100 comporte un composant 1 appartenant à un oscillateur, avantageusement ce composant 1 qui est équilibré dynamiquement, pour sa vitesse de pivotement maximale, autour de l'axe longitudinal D1.

De préférence, la première extrémité 2 du composant 1 est agencée avec une surface de contact ponctuelle avec la première surface 5, la surface de contact ponctuelle étant localement sphérique ou conique.

Avantageusement, la première surface 5 comporte une surface de réception agencée pour coopérer avec la première extrémité 2, la surface de réception étant creuse et localement sphérique ou conique.

Dans une application très avantageuse de l'invention, le composant 1 est un balancier, dont l'axe de pivotement D est confondu avec l'axe longitudinal D1.

Pour une efficacité maximale de l'invention, si la partie arbrée du composant 1 est en matériau ferromagnétique ou aimanté, ou comporte des zones dans un tel matériau, selon la direction de l'axe longitudinal D1 du composant 1, il est avantageux que le reste du composant 1 soit en matériau dit amagnétique ou magnétiquement inerte, par exemple en silicium, ou dans un matériau de perméabilité magnétique relative inférieure à 1.0001 et réalisé notamment par les technologies MEMS, ou « LIGA », ou similaire, ou encore dans un matériau au moins partiellement amorphe. Dans le cas particulier d'un balancier, au moins la serge et les bras sont de préférence réalisées dans un tel matériau, il en est de même du spiral qui lui est associé. Ainsi il n'y a pas de perturbation réciproque entre l'oscillateur et le dispositif de guidage en pivotement 10. Avantageusement tous les mobiles proches des extrémités 2 et 3 du composant sont réalisés en de tels matériaux dits amagnétiques.

Une réalisation avec un balancier-spiral monobloc en silicium comportant, soit un arbre magnétique ou en matériau perméable magnétiquement traversant en son axe principal d'inertie, soit deux demi-axes alignés de part et d'autre du balancier sur ce même axe, magnétiques ou en matériau perméable magnétiquement, est particulièrement avantageuse.

Le pivot magnétique 100 peut adopter trois configurations:

- il comporte un composant 1 comportant une partie sensiblement arbrée en matériau perméable magnétiquement, et en ce que la première masse 4 et la deuxième masse 6 sont chacune en matériau magnétique.

- il comporte un composant 1 comportant une partie sensiblement arbrée en matériau magnétique, et en ce que la première masse 4 et la deuxième masse 6 sont chacune en matériau perméable magnétiquement.

- il comporte un composant 1 comportant une partie sensiblement arbrée en matériau magnétique, et en ce que la première masse 4 et la deuxième masse 6 sont chacune en matériau magnétique.

L'invention concerne encore un mouvement d'horlogerie 1000 comportant au moins un tel dispositif 10 de guidage en pivotement, ou/et au moins un tel pivot magnétique 100.

L'invention concerne encore une pièce d'horlogerie comportant au moins un tel mouvement d'horlogerie 1000, ou/et au moins un tel dispositif 10 de guidage en pivotement, ou/et au moins un tel pivot magnétique 100.

Ce pivot magnétique 100 comporte un dispositif 10 de guidage en pivotement du composant horloger 1 comportant, à une distance d'entrefer E supérieure, de la valeur d'un jeu fonctionnel déterminé J, à l'entraxe L entre la première extrémité 2 et la deuxième extrémité 3, une première surface 5 d'une première masse polaire 4 et une deuxième surface 7 d'une deuxième masse polaire 6. Ces masses polaires 4 ; 6 sont agencées pour, ou bien être attirée chacune par un champ magnétique, respectivement électrostatique, émis par une des première extrémité 2 ou deuxième extrémité 3 du composant 1, ou bien pour générer chacune un champ magnétique, respectivement électrostatique, attirant une des première extrémité 2 ou deuxième extrémité 3 du composant 1, de façon à ce que les forces d'attraction magnétiques, respectivement électrostatiques s'exerçant sur le composant 1 à ses deux extrémités 2, 3 soient d'intensité différente, de façon à attirer le composant 1 par une de ses deux es extrémités 2, 3, en contact direct ou indirect sur une seule des surfaces 5, 7 des masses polaires 4, 6.

De préférence, ce pivot magnétique 100 comporte un dispositif de guidage 10 tel que décrit ci-dessus, dans l'une de ses variantes. Il comporte encore un composant 1 comportant une partie sensiblement arbrée en matériau au moins perméable magnétiquement, respectivement électrostatiquement, ou au moins magnétique, respectivement électrostatique, s'étendant entre une première extrémité 2 et une deuxième extrémité 3 définissant ensemble un axe longitudinal D1. Le dispositif de guidage 10 comporte des moyens d'accès pour l'insertion du composant 1 dans l'entrefer. Ou bien le dispositif de guidage 10 est réalisé démontable en plusieurs parties comportant des moyens de coopération entre eux ou/et avec un pont 31 ou/et une platine 30 pour permettre le montage du composant 1 en appui par sa première extrémité 2 sur une première partie comportant la première surface 5 et la première masse 4, préalablement au montage d'une deuxième partie comportant la deuxième surface 7 et la deuxième masse 6.

De façon particulièrement avantageuse, tel que visible sur les figures 8 et 9, le composant 1 présente une partie fuselée 8, de révolution autour de l'axe longitudinal D1, et de section dégressive depuis le centre de gravité du composant 1 vers la deuxième extrémité 3, de façon à améliorer le gradient de champ magnétique au voisinage de la deuxième surface 7, et à faciliter le centrage de la deuxième extrémité 3 sur l'axe de pivotement D.

Quand le pivot magnétique 100 comporte un composant 1 appartenant à un oscillateur, avantageusement ce composant 1 qui est équilibré dynamiquement, pour sa vitesse de pivotement maximale, autour de l'axe longitudinal D1.

De préférence, la première extrémité 2 du composant 1 est agencée avec une surface de contact ponctuelle avec la première surface 5, la surface de contact ponctuelle étant localement sphérique ou conique.

Avantageusement, la première surface 5 comporte une surface de réception agencée pour coopérer avec la première extrémité 2, la surface de réception étant creuse et localement sphérique ou conique.

Dans une application très avantageuse de l'invention, le composant 1 est un balancier, dont l'axe de pivotement D est confondu avec l'axe longitudinal D1.

Pour une efficacité maximale de l'invention, si la partie arbrée du composant 1 est en matériau ferromagnétique ou aimanté, ou comporte des zones dans un tel matériau, selon la direction de l'axe longitudinal D1 du composant 1, il est avantageux que le reste du composant 1 soit en matériau dit amagnétique ou magnétiquement inerte, par exemple en silicium, ou dans un matériau de perméabilité magnétique relative inférieure à 1.0001 et réalisé notamment par les technologies MEMS, ou « LIGA », ou similaire, ou encore dans un matériau au moins partiellement amorphe. Dans le cas particulier d'un balancier, au moins la serge et les bras sont de préférence réalisées dans un tel matériau, il en est de même du spiral qui lui est associé. Ainsi il n'y a pas de perturbation réciproque entre l'oscillateur et le dispositif de guidage en pivotement 10. Avantageusement tous les mobiles proches des extrémités 2 et 3 du composant sont réalisés en de tels matériaux dits amagnétiques.

Une réalisation avec un balancier-spiral monobloc en silicium comportant, soit un arbre magnétique ou en matériau perméable magnétiquement traversant en son axe principal d'inertie, soit deux demi-axes alignés de part et d'autre du balancier sur ce même axe, magnétiques ou en matériau perméable magnétiquement, est particulièrement avantageuse.

Le pivot magnétique 100 peut adopter trois configurations:

- il comporte un composant 1 comportant une partie sensiblement arbrée en matériau perméable magnétiquement, et en ce que la première masse 4 et la deuxième masse 6 sont chacune en matériau magnétique.

- il comporte un composant 1 comportant une partie sensiblement arbrée en matériau magnétique, et en ce que la première masse 4 et la deuxième masse 6 sont chacune en matériau perméable magnétiquement.

- il comporte un composant 1 comportant une partie sensiblement arbrée en matériau magnétique, et en ce que la première masse 4 et la deuxième masse 6 sont chacune en matériau magnétique.

L'invention concerne encore un mouvement d'horlogerie 1000 comportant au moins un tel dispositif 10 de guidage en pivotement, ou/et au moins un tel pivot magnétique 100.

L'invention concerne encore une pièce d'horlogerie comportant au moins un tel mouvement d'horlogerie 1000, ou/et au moins un tel dispositif 10 de guidage en pivotement, ou/et au moins un tel pivot magnétique 100.

**Revendications**

1. Pivot magnétique (100) comportant un composant horloger (1) en matériau au moins partiellement perméable magnétiquement, ou au moins partiellement magnétique, et lequel composant (1) comporte une première extrémité (2) et une deuxième extrémité (3), ledit pivot magnétique (100) comportant un dispositif (10) de guidage en pivotement dudit composant horloger (1), lequel dispositif de guidage (10) comporte, à une distance d'entrefer (E) supérieure, de la valeur d'un jeu fonctionnel déterminé (J), à l'entraxe (L) entre ladite première extrémité (2) et ladite deuxième extrémité (3), une première surface (5) d'une première masse polaire (4) et une deuxième surface (7) d'une deuxième masse polaire (6), lesdites première masse polaire (4) et deuxième masse polaire (6) étant agencées pour, ou bien être attirée chacune par un champ magnétique émis par une desdites première extrémité (2) ou deuxième extrémité (3) dudit composant (1), ou bien pour générer chacune un champ magnétique attirant une desdites première extrémité (2) ou deuxième extrémité (3), de façon à ce que les forces d'attraction magnétiques s'exerçant sur ledit composant (1) à ses dites première extrémité (2) et deuxième extrémité (3) soient d'intensité différente, de façon à attirer ledit composant (1) par une de ses deux dites première extrémité (2) ou deuxième extrémité (3), en contact direct ou indirect sur une seule desdites première surface (5) ou deuxième surface (7), **caractérisé en ce que** la distance d'entrefer (E) entre ladite première surface (5) et ladite deuxième surface (7) est dimensionnée de façon à assurer ledit jeu fonctionnel déterminé (J) sur toute la plage de températures d'utilisation dudit dispositif de guidage (10) et dudit composant (1), et **en ce que** ledit jeu fonctionnel déterminé (J) est supérieur ou égal à 0,020 mm, et **en ce que** ledit composant (1) comporte une partie arbrée qui s'étend entre sa dite première extrémité (2) et sa dite deuxième extrémité (3), et **en ce que**, de part et d'autre de ladite première extrémité (2) et de ladite deuxième extrémité (3), au niveau de ladite première (4) et de ladite deuxième masse polaire (6), un premier champ magnétique et un deuxième champ magnétique de sens opposés, chacun de symétrie de révolution autour d'un axe de pivotement (D), tendent à aligner ledit composant (1) selon ledit axe de pivotement (D) et à attirer ledit composant (1) vers sa dite masse polaire (4 ; 6), la densité dudit premier champ magnétique au voisinage de ladite première extrémité (2) étant supérieure à celle dudit deuxième champ magnétique au voisinage de ladite deuxième extrémité (3), de façon à attirer ladite première extrémité (2) au contact de ladite première masse polaire (4), et encore **caractérisé en ce que** la densité de champ magnétique au voisinage de ladite première surface (5) et de ladite deuxième surface (7) est supérieure ou égale à 100000 A / m, et **en ce que** ledit dispositif (10) de guidage en pivotement comporte des moyens de blindage (20) agencés pour interdire l'action de tout champ magnétique à composante radiale par rapport audit axe de pivotement (D), au voisinage desdites première (5) et deuxième (7) surfaces de contact.

2. Pivot magnétique (100) selon la revendication 1, **caractérisé en ce que** lesdits moyens de blindage (20) comportent au moins une partie tubulaire (21 ; 22) axée sur ledit axe de pivotement (D) et entourant ladite première masse (4) et ladite deuxième masse (6), et au moins ladite deuxième extrémité (3) dudit composant (1).

3. Pivot magnétique (100) selon la revendication 1 ou 2, **caractérisé en ce que** ladite première masse polaire (4) et ladite deuxième masse polaire (6) sont chacune en matériau magnétique, ou perméable magnétiquement, et sont magnétiques si ledit composant (1) ne l'est pas, ladite première masse polaire (4) et ladite deuxième masse polaire (6) définissant ensemble un axe de pivotement (D) sur lequel est aligné un axe longitudinal (D1) dudit composant (1) joignant lesdites première extrémité (2) et deuxième extrémité (3) de ce dernier, lorsque ledit composant (1) est inséré entre lesdites première masse polaire (4) et deuxième masse polaire (6).

4. Pivot magnétique (100) selon la revendication 3, **caractérisé en ce que** ladite première masse (4), respectivement ladite première extrémité (2), génère au voisinage de ladite première surface (5) un premier champ magnétique selon ledit axe de pivotement (D) tendant à rapprocher ladite première masse (4) de ladite première extrémité (2), et de densité supérieure à la densité d'un deuxième champ magnétique selon ledit axe de pivotement (D) généré au voisinage de ladite deuxième surface (7) par ladite deuxième masse (6), respectivement ladite deuxième extrémité (3), ledit deuxième champ magnétique tendant à rapprocher ladite deuxième masse (6) de ladite deuxième extrémité (3), de façon à ce que ladite première extrémité (2) soit maintenue en contact avec ladite première surface (5), et à ce que ledit axe longitudinal (D1) dudit composant (1) soit confondu avec ledit axe de pivotement (D), ladite deuxième extrémité (3) restant alors à distance de ladite deuxième surface (7).

5. Pivot magnétique (100) selon l'une des revendications 1 à 4, **caractérisé en ce que** le choix de la perméabilité magnétique du matériau dudit composant (1), et la détermination de l'aimantation, selon le cas, de ladite première masse (4) et de ladite deuxième masse (6) d'une part, ou/et dudit composant (1) d'autre part, sont effectués de façon à ce que ledit premier champ magnétique et ledit deuxième champ magnétique exercent sur ledit composant (1) des forces d'attraction supérieures à dix fois la force d'attraction de la pesanteur sur ledit composant (1).

6. Pivot magnétique (100) selon l'une des revendications 1 à 5, **caractérisé en ce que** le choix de la perméabilité magnétique du matériau dudit composant (1), et la détermination de l'aimantation, selon le cas, de ladite première masse (4) et de ladite deuxième masse (6) d'une part, ou/et dudit composant (1) d'autre part, sont effectués de façon à ce que ledit premier champ magnétique et ledit deuxième champ magnétique exercent sur ledit composant (1) des couples d'attraction supérieurs à dix fois le couple d'attraction de la pesanteur sur ledit composant (1) dans toute position de celui-ci.

7. Pivot magnétique (100) selon l'une des revendications 1 à 6, **caractérisé en ce que** au moins ladite première surface (5) comporte un revêtement dur ou est constituée par une surface dure d'une entretoise (18) interposée entre ladite première masse (4) et ledit composant (1).

8. Pivot magnétique (100) selon l'une des revendications 1 à 7, **caractérisé en ce qu'**il comporte des moyens de bouclage de champ magnétique entre ladite première masse (4) et ladite deuxième masse (6).

9. Pivot magnétique (100) selon l'une des revendications 1 à 8, **caractérisé en ce que** ledit dispositif de guidage (10) comporte des moyens d'accès pour l'insertion dudit composant (1) dans ledit entrefer, ou bien que ledit dispositif de guidage (10) est réalisé démontable en plusieurs parties comportant des moyens de coopération entre eux ou/et avec un pont (31) ou/et une platine (30) pour permettre le montage dudit composant (1) en appui par sa dite première extrémité (2) sur une première partie comportant la dite première surface (5) et ladite première masse (4), préalablement au montage d'une deuxième partie comportant ladite deuxième surface (7) et ladite deuxième masse (6).

10. Pivot magnétique (100) selon l'une des revendications 1 à 9, **caractérisé en ce que** ledit composant (1) présente une partie fuselée (8), de révolution autour dudit axe longitudinal (D1), et de section dégressive depuis le centre de gravité dudit composant (1) vers ladite deuxième extrémité (3), de façon à améliorer le gradient de champ magnétique au voisinage de ladite deuxième surface (7), et à faciliter le centrage de ladite deuxième extrémité (3) sur ledit axe de pivotement (D).

11. Pivot magnétique (100) selon l'une des revendications 1 à 10, **caractérisé en ce que** ledit composant (1) est un balancier ou un balancier-spiral dont l'axe de pivotement (D) est confondu avec son axe longitudinal (D1) entre ladite première extrémité (2) et ladite deuxième extrémité (3).

12. Pivot magnétique (100) selon la revendication 11, **caractérisé en ce que** au moins la serge et les bras dudit balancier sont réalisés en matériau magnétiquement inerte, ou bien en silicium, ou bien dans un matériau à très faible perméabilité magnétique, ou/et réalisé par les technologies MEMS, ou « LIGA », ou bien dans un matériau au moins partiellement amorphe, et que ledit balancier comporte, ou un arbre magnétique ou en matériau perméable magnétiquement le traversant en son axe principal d'inertie, ou bien deux demi-axes alignés de part et d'autre du balancier sur ce même axe, magnétiques ou en matériau perméable magnétiquement.

13. Pivot magnétique (100) selon l'une des revendications 1 à 12, **caractérisé en ce que** ledit composant (1) comporte une partie sensiblement arbrée en matériau perméable magnétiquement, et **en ce que** ladite première masse (4) et ladite deuxième masse (6) sont chacune en matériau magnétique.

14. Pivot magnétique (100) selon l'une des revendications 1 à 12, **caractérisé en ce que** ledit composant (1) comporte une partie sensiblement arbrée en matériau magnétique, et **en ce que** ladite première masse (4) et ladite deuxième masse (6) sont chacune en matériau perméable magnétiquement.

15. Pivot magnétique (100) selon l'une des revendications 1 à 12, **caractérisé en ce que** ledit composant (1) comporte une partie sensiblement arbrée en matériau magnétique, et **en ce que** ladite première masse (4) et ladite deuxième masse (6) sont chacune en matériau magnétique.

16. Mouvement d'horlogerie (1000) comportant au moins un pivot magnétique (100) selon l'une des revendications 1 à 15.

17. Pièce d'horlogerie comportant au moins un mouvement d'horlogerie (1000) selon la revendication 16, ou/et au moins un pivot magnétique (100) selon l'une des revendications 1 à 15

18. Pivot électrostatique (100) comportant un composant horloger (1) en matériau au moins partiellement perméable électrostatiquement, ou au moins partiellement électrostatique, et lequel comporte une première extrémité (2) et une deuxième extrémité (3), **caractérisé en ce que** ledit pivot électrostatique (100) comporte un dispositif (10) de guidage en pivotement dudit composant horloger (1) comportant, à une distance d'entrefer (E) supérieure, de la valeur d'un jeu fonctionnel déterminé (J), à l'entraxe (L) entre ladite première extrémité (2) et ladite deuxième extrémité (3), une première surface (5) d'une première masse polaire (4) et une deuxième surface (7) d'une deuxième masse polaire (6), lesdites première masse polaire (4) et deuxième masse polaire (6) étant agencées pour, ou bien être attirée chacune par un champ électrostatique, émis par une desdites première extrémité (2) ou deuxième extrémité (3), ou bien pour générer chacune un champ électrostatique, attirant une desdites première extrémité (2) ou deuxième extrémité (3), de façon à ce que les forces d'attraction électrostatiques s'exerçant sur ledit composant (1) à ses dites première extrémité (2) et deuxième extrémité (3) soient d'intensité différente, de façon à attirer ledit composant (1) par une de ses deux dites première extrémité (2) ou deuxième extrémité (3), en contact direct ou indirect sur une seule desdites première surface (5) ou deuxième surface (7).

19. Pivot électrostatique (100) selon la revendication 18, **caractérisé en ce que** ladite première masse polaire (4) et ladite deuxième masse polaire (6) sont chacune mobile dans une chambre entre deux butées (41, 42) respectivement (43, 44).

20. Pivot électrostatique (100) selon la revendication 18 ou 19, **caractérisé en ce que** ledit composant (1) est en matériau conducteur si lesdites première masse polaire (4) et deuxième masse polaire (6) sont électrisées et chargées avec une énergie suffisante, ou **en ce que** lesdites première masse polaire (4) et deuxième masse polaire (6) sont en matériau conducteur si ledit composant (1) est électrisé et chargé, ledit matériau conducteur étant polarisé par induction grâce aux pièces qui sont chargées de manière permanente.

21. Pivot électrostatique (100) selon la revendication 18 ou 19, **caractérisé en ce que** ledit composant (1) est en matériau diélectrique, isolant ou semi-conducteur, si lesdites première masse polaire (4) et deuxième masse polaire (6) sont électrisées et chargées avec une énergie suffisante, ou **en ce que** lesdites première masse polaire (4) et deuxième masse polaire (6) sont en matériau diélectrique, isolant ou semi-conducteur, si ledit composant (1) est électrisé et chargé, la polarisation étant alors limitée à la surface dudit diélectrique.

22. Pivot électrostatique (100) selon l'une des revendications 18 à 21, **caractérisé en ce que** ledit composant (1) comporte une partie sensiblement arbrée en matériau au moins perméable électrostatiquement, ou au moins électrostatique, s'étendant entre ladite première extrémité (2) et ladite deuxième extrémité (3) définissant ensemble un axe longitudinal (D1), et **en ce que** ledit dispositif de guidage (10) comporte des moyens d'accès pour l'insertion dudit composant (1) dans l'entrefer, ou bien **en ce que** ledit dispositif de guidage (10) est réalisé démontable en plusieurs parties comportant des moyens de coopération entre eux ou/et avec un pont (31) ou/et une platine (30) pour permettre le montage dudit composant (1) en appui par sa dite première extrémité (2) sur une première partie comportant ladite première surface (5) et la première masse polaire (4), préalablement au montage d'une deuxième partie comportant ladite deuxième surface (7) et ladite deuxième masse polaire (6).

23. Pivot électrostatique (100) selon l'une des revendications 18 à 22, **caractérisé en ce que** ladite distance d'entrefer (E) entre ladite première surface (5) et ladite deuxième surface (7) est dimensionnée de façon à assurer ledit jeu fonctionnel déterminé (J) sur toute la plage de températures d'utilisation dudit dispositif de guidage (10) et dudit composant (1), et **en ce que** ledit jeu fonctionnel déterminé (J) est supérieur ou égal à 0,020 mm.

24. Pivot électrostatique (100) selon l'une des revendications 18 à 23, **caractérisé en ce que** au moins ladite première surface (5) comporte un revêtement dur ou est constituée par une surface dure d'une entretoise (18) interposée entre ladite première masse (4) et ledit composant (1).

25. Pivot électrostatique (100) selon l'une des revendications 18 à 24, **caractérisé en ce que** ledit composant (1) est un balancier dont l'axe de pivotement (D) est confondu avec un axe longitudinal (D1) entre ladite première extrémité (2) et ladite deuxième extrémité (3).

26. Mouvement d'horlogerie (1000) comportant au moins un pivot électrostatique (100) selon l'une des revendications 18 à 25.

27. Pièce d'horlogerie comportant au moins un mouvement d'horlogerie (1000) selon la revendication 26, ou/et au moins un pivot électrostatique (100) selon l'une des revendications 18 à 25.

**Patentansprüche**

1. Magnetischer Zapfen (100), der eine Uhrenkomponente (1) aus einem wenigstens teilweise magnetisch permeablen oder wenigstens teilweise magnetischen Material enthält, wobei die Komponente (1) ein erstes Ende (2) und ein zweites Ende (3) aufweist, wobei der magnetische Zapfen (100) eine Schwenkführungsvorrichtung (10) der Uhrenkomponente (1) aufweist, wobei die Führungsvorrichtung (10) in einem Luftspaltabstand (E), der um den Wert eines bestimmten funktionalen Spiels (J) größer als der Mittenabstand (L) zwischen dem ersten Ende (2) und dem zweite Ende (3) ist, eine erste Oberfläche (5) einer ersten Polmasse (4) und eine zweite Oberfläche (7) einer zweiten Polmasse umfasst, wobei die erste Polmasse (4) und die zweite Polmasse (6) dafür ausgelegt sind, entweder jeweils durch ein Magnetfeld, das von dem ersten Ende (2) oder dem zweiten Ende (3) der Komponente (1) erzeugt wird, angezogen zu werden oder jeweils ein Magnetfeld zu erzeugen, das das erste Ende (2) oder das zweite Ende (3) anzieht, derart, dass die Kräfte der magnetischen Anziehung, die auf die Komponente (1) auf das erste Ende (2) und auf das zweite Ende (3) ausgeübt werden, eine unterschiedliche Stärke haben, so dass die Komponente (1) an einem ihrer zwei Enden, dem ersten Ende (2) oder dem zweiten Ende (3), in direkten oder indirekten Kontakt mit einer der ersten Oberfläche (5) oder der zweiten Oberfläche (7) angezogen wird, **dadurch gekennzeichnet, dass** der Luftspaltabstand (E) zwischen der ersten Oberfläche (5) und der zweiten Oberfläche (7) so bemessen ist, dass das bestimmte funktionale Spiel (J) in dem gesamten Temperaturbereich der Nutzung der Führungsvorrichtung (10) und der Komponente (1) gewährleistet ist, und dass das bestimmte funktionale Spiel (J) größer oder gleich 0,020 mm ist und dass die Komponente (1) einen Wellenabschnitt umfasst, der sich zwischen ihrem ersten Ende (2) und ihrem zweiten Ende (3) erstreckt, und dass beiderseits des ersten Endes (2) und des zweiten Endes (3) auf Höhe der ersten Polmasse (4) und der zweiten Polmasse (6) ein erstes Magnetfeld und ein zweites Magnetfeld mit entgegengesetzter Richtung, die jeweils um eine Schwenkachse (D) rotationssymmetrisch sind, bestrebt sind, die Komponente (1) auf die Schwenkachse (D) auszurichten und die Komponente (1) zu seiner Polmasse (4; 6) anzuziehen, wobei die Dichte des ersten Magnetfeldes in der Umgebung des ersten Endes (2) größer als jene des zweiten Magnetfeldes in der Umgebung des zweiten Endes (3) ist, derart, dass das erste Ende (2) in Kontakt mit der ersten Polmasse (4) angezogen wird, und außerdem **dadurch gekennzeichnet, dass** die Dichte des Magnetfeldes in der Umgebung der ersten Oberfläche (5) und der zweiten Oberfläche (7) größer oder gleich 100000 A/m ist und dass die Schwenkführungsvorrichtung (10) Abschirmungsmittel (20) umfasst, die dafür ausgelegt sind, die Wirkung jeglichen Magnetfeldes mit radialer Komponente in Bezug auf die Schwenkachse (D) in der Umgebung der ersten (5) und der zweiten (7) Kontaktoberfläche zu verhindern.

2. Magnetischer Zapfen (100) nach Anspruch 1, **dadurch gekennzeichnet, dass** die Abschirmungsmittel (20) wenigstens einen rohrförmigen Abschnitt (21; 22), der auf die Schwenkachse (D) ausgerichtet ist und die erste Masse (4) und die zweite Masse (6) und wenigstens das zweite Ende (3) der Komponente (1) umgibt, umfassen.

3. Magnetischer Zapfen (100) nach Anspruch 1 oder 2, **dadurch gekennzeichnet, dass** die erste Polmasse (4) und die zweite Polmasse (6) jeweils aus einem magnetischen oder magnetisch permeablen Material bestehen und magnetisch sind, falls die Komponente (1) dies nicht ist, wobei die erste Polmasse (4) und die zweite Polmasse (6) gemeinsam eine Schwenkachse (D) definieren, auf die eine Längsachse (D1) der Komponente (1) ausgerichtet ist, die das erste Ende (2) und das zweite Ende (3) dieser Letzteren verbindet, wenn die Komponente (1) zwischen die erste Polmasse (4) und die zweite Polmasse (6) eingefügt ist.

4. Magnetischer Zapfen (100) nach Anspruch 3, **dadurch gekennzeichnet, dass** die erste Masse (4) bzw. das erste Ende (2) in der Umgebung der ersten Oberfläche (5) ein erstes Magnetfeld längs der Schwenkachse (D) erzeugt, das bestrebt ist, die erste Masse (4) des ersten Endes (2) anzuziehen, und eine Dichte besitzt, die größer als die Dichte eines zweiten Magnetfeldes längs der Schwenkachse (D) ist, das in der Umgebung der zweiten Oberfläche (7) durch die zweite Masse (6) bzw. das zweite Ende (3) erzeugt wird, wobei das zweite Magnetfeld bestrebt ist, die zweite Masse (6) des zweiten Endes (3) anzuziehen, derart, dass das erste Ende (2) in Kontakt mit der ersten Oberfläche (5) gehalten wird und dass die Längsachse (D1) der Komponente (1) mit der Schwenkachse (D) zusammenfällt, wobei das zweite Ende (3) dann in einem Abstand von der zweiten Oberfläche (7) bleibt.

5. Magnetischer Zapfen (100) nach einem der Ansprüche 1 bis 4, **dadurch gekennzeichnet, dass** die Wahl der magnetischen Permeabilität des Materials der Komponente (1) und gegebenenfalls der Bestimmung der Magnetisierung der ersten Masse (4) und der zweiten Masse (6) einerseits und/oder der Komponente (1) andererseits in der Weise erfolgen, dass das erste Magnetfeld und das zweite Magnetfeld auf die Komponente (1) Anziehungskräfte ausüben, die größer als die zehnfache Schwerkraft auf die Komponente (1) sind.

6. Magnetischer Zapfen (100) nach einem der Ansprüche 1 bis 5, **dadurch gekennzeichnet, dass** die Wahl der magnetischen Permeabilität des Materials der Komponente (1) und gegebenenfalls der Bestimmung der Magnetisierung der ersten Masse (4) und der zweiten Masse (6) einerseits und/oder der Komponente (1) andererseits in der Weise erfolgen, dass das erste Magnetfeld und das zweite Magnetfeld auf die Komponente (1) Anziehungsmomente ausüben, die größer als das zehnfache Anziehungsmoment der Schwerkraft auf die Komponente (1) in jeder ihrer Positionen ist.

7. Magnetischer Zapfen (100) nach einem der Ansprüche 1 bis 6, **dadurch gekennzeichnet, dass** wenigstens die erste Oberfläche (5) eine harte Beschichtung aufweist oder aus einer harten Oberfläche eines Abstandshalters (18), der zwischen die erste Masse (4) und die Komponente (1) eingefügt ist, gebildet ist.

8. Magnetischer Zapfen (100) nach einem der Ansprüche 1 bis 7, **dadurch gekennzeichnet, dass** er zwischen der ersten Masse (4) und der zweiten Masse (6) Magnetfeldschleifenmittel umfasst.

9. Magnetischer Zapfen (100) nach einem der Ansprüche 1 bis 8, **dadurch gekennzeichnet, dass** die Führungsvorrichtung (10) Zugangsmittel zum Einfügen der Komponente (1) in den Luftspalt umfasst oder die Führungsvorrichtung (10) zerlegbar aus mehreren Teilen verwirklicht ist, die Mittel für die Zusammenwirkung miteinander und/oder mit einer Brücke (31) und/oder mit einer Platine (30) umfassen, um die Montage der Komponente (1) abgestützt durch ihr erstes Ende (2) an einem ersten Teil, der die erste Oberfläche (5) und die erste Masse (4) enthält, vor der Montage eines zweiten Teils, der die zweite Oberfläche (7) und die zweite Masse (6) enthält, zu ermöglichen.

10. Magnetischer Zapfen (100) nach einem der Ansprüche 1 bis 9, **dadurch gekennzeichnet, dass** die Komponente (1) einen um die Längsachse (D1) rotationssymmetrischen spindelförmigen Teil (8) mit einem Querschnitt, der von dem Schwerpunkt der Komponente (1) zu dem zweiten Ende (3) abnimmt, aufweist, derart, dass der Magnetfeldgradient in der Umgebung der zweiten Oberfläche (7) verbessert wird und die Zentrierung des zweiten Endes (3) auf die Schwenkachse (D) erleichtert wird.

11. Magnetischer Zapfen (100) nach einem der Ansprüche 1 bis 10, **dadurch gekennzeichnet, dass** die Komponente (1) eine Unruh oder eine Spiralfederunruh ist, deren Schwenkachse (D) zwischen dem ersten Ende (2) und dem zweiten Ende (3) mit ihrer Längsachse (D1) zusammenfällt.

12. Magnetischer Zapfen (100) nach Anspruch 11, **dadurch gekennzeichnet, dass** wenigstens der Unruh-Reif und die Arme der Unruh aus einem magnetisch trägen Material, entweder aus Silicium oder aus einem Material mit sehr geringer magnetischer Permeabilität verwirklicht sind oder/und durch die MEMS- oder "LIGA"-Technologien verwirklicht sind oder aus einem wenigstens teilweise amorphen Material verwirklicht sind und dass die Unruh entweder eine magnetische Welle oder eine Welle aus einem magnetisch permeablen Material, die sie längs ihrer Hauptträgheitsachse durchläuft, oder zwei Halbwellen, die beiderseits der Unruh auf dieselbe Achse ausgerichtet sind und magnetisch sind oder aus einem magnetisch permeablen Material verwirklicht sind, umfasst.

13. Magnetischer Zapfen (100) nach einem der Ansprüche 1 bis 12, **dadurch gekennzeichnet, dass** die Komponente (1) einen im Wesentlichen wellenförmigen Abschnitt aus einem magnetisch permeablen Material umfasst und dass die erste Masse (4) und die zweite Masse (6) jeweils aus einem magnetischen Material bestehen.

14. Magnetischer Zapfen (100) nach einem der Ansprüche 1 bis 12, **dadurch gekennzeichnet, dass** die Komponente (1) einen im Wesentlichen wellenförmigen Abschnitt aus einem magnetischen Material umfasst und dass die erste Masse (4) und die zweite Masse (6) jeweils aus einem magnetisch permeablen Material bestehen.

15. Magnetischer Zapfen (100) nach einem der Ansprüche 1 bis 12, **dadurch gekennzeichnet, dass** die Komponente (1) einen im Wesentlichen wellenförmigen Abschnitt aus einem magnetischen Material umfasst und dass die erste Masse (4) und die zweite Masse (6) jeweils aus einem magnetischen Material bestehen.

16. Uhrwerk (1000), das wenigstens einen magnetischen Zapfen (100) nach einem der Ansprüche 1 bis 15 umfasst.

17. Zeitmessgerät, das wenigstens ein Uhrwerk (1000) nach Anspruch 16 und/oder wenigstens einen magnetischen Zapfen (100) nach einem der Ansprüche 1 bis 15 umfasst.

18. Elektrostatischer Zapfen (100), der eine Uhrenkomponente (1) aus einem wenigstens teilweise elektrostatisch permeablen Material oder wenigstens teilweise elektrostatischen Material umfasst und ein erstes Ende (2) und ein zweites Ende (3) umfasst, **dadurch gekennzeichnet, dass** der elektrostatische Zapfen (100) eine Schwenkführungsvorrichtung (10) der Uhrenkomponente (1) umfasst, die in einem Luftspaltabstand (E), der um den Wert eines bestimmten funktionalen Spiels (J) größer als der Mittenabstand (L) zwischen dem ersten Ende (2) und dem zweiten Ende (3) ist, eine erste Oberfläche (5) einer ersten Polmasse (4) und eine zweite Oberfläche (7) einer zweiten Polmasse (6) umfasst, wobei die erste Polmasse (4) und die zweite Polmasse (6) dafür ausgelegt sind, entweder jeweils durch ein elektrostatisches Feld, das von dem ersten Ende (2) oder dem zweiten Ende (3) erzeugt wird, angezogen zu werden oder jeweils ein elektrostatisches Feld zu erzeugen, das das erste Ende (2) oder das zweite Ende (3) anzieht, derart, dass die elektrostatischen Anziehungskräfte, die auf die Komponente (1) an ihrem ersten Ende (2) und ihrem zweiten Ende (3) ausgeübt werden, eine unterschiedliche Stärke haben, derart, dass die Komponente (1) durch das erste Ende (2) oder das zweite Ende (3) in direkten oder indirekten Kontakt mit einer einzigen der ersten Oberfläche (5) oder der zweiten Oberfläche (7) angezogen wird.

19. Elektrostatischer Zapfen (100) nach Anspruch 18, **dadurch gekennzeichnet, dass** die erste Polmasse (4) und die zweite Polmasse (6) jeweils in einer Kammer zwischen zwei Anschlägen (41, 42) bzw. (43, 44) beweglich sind.

20. Elektrostatischer Zapfen (100) nach Anspruch 18 oder 19, **dadurch gekennzeichnet, dass** die Komponente (1) aus einem leitenden Material besteht, falls die erste Polmasse (4) und die zweite Polmasse (6) elektrisch geladen sind und mit ausreichender Energie versehen sind, oder dass die erste Polmasse (4) und die zweite Polmasse (6) aus einem leitenden Material bestehen, falls die Komponente (1) elektrisch geladen und mit Energie versehen ist, wobei das leitende Material durch Induktion kraft der Teile, die dauerhaft geladen sind, durch Induktion vorgespannt ist.

**21.** Elektrostatischer Zapfen (100) nach Anspruch 18 oder 19, **dadurch gekennzeichnet, dass** die Komponente (1) aus einem dielektrischen, isolierenden oder halbleitenden Material besteht, falls die erste Polmasse (4) und die zweite Polmasse (6) elektrisch geladen und mit ausreichender Energie versehen sind, oder dass die erste Polmasse (4) und die zweite Polmasse (6) aus einem dielektrischen, isolierenden oder halbleitenden Material bestehen, falls die Komponente (1) elektrisch geladen und mit Energie versehen ist, wobei die Vorspannung dann auf die Oberfläche des Dielektrikums begrenzt ist.

**22.** Elektrostatischer Zapfen (100) nach einem der Ansprüche 18 bis 21, **dadurch gekennzeichnet, dass** die Komponente (1) einen im Wesentlichen wellenförmigen Teil aus einem wenigstens elektrostatisch permeablen Material oder aus einem wenigstens elektrostatischen Material umfasst, der sich zwischen dem ersten Ende (2) und dem zweiten Ende (3) erstreckt, die gemeinsam eine Längsachse (D1) definieren, und dass die Führungsvorrichtung (10) Zugangsmittel zum Einsetzen der Komponente (1) in den Luftspalt umfasst oder dass die Führungsvorrichtung (10) zerlegbar aus mehreren Teilen verwirklicht ist, die Mittel für die Zusammenwirkung miteinander und/oder mit einer Brücke (31) und/oder mit einer Platine (30) umfassen, um die Montage der Komponente (1) abgestützt durch ihr erstes Ende (2) auf einem ersten Teil, der die erste Oberfläche (5) und die erste Polmasse (4) umfasst, vor der Montage eines zweiten Teils, der die zweite Oberfläche (7) und die zweite Polmasse (6) umfasst, zu ermöglichen.

**23.** Elektrostatischer Zapfen (100) nach einem der Ansprüche 18 bis 22, **dadurch gekennzeichnet, dass** der Luftspaltabstand (E) zwischen der ersten Oberfläche (5) und der zweiten Oberfläche (7) in der Weise bemessen ist, dass das bestimmte funktionale Spiel (J) in dem gesamten Bereich von Temperaturen der Nutzung der Führungsvorrichtung (10) und der Komponente (1) gewährleistet ist und dass das bestimmte funktionale Spiel (J) größer oder gleich 0,020 mm ist.

**24.** Elektrostatischer Zapfen (100) nach einem der Ansprüche 18 bis 23, **dadurch gekennzeichnet, dass** wenigstens die erste Oberfläche (5) eine harte Beschichtung umfasst oder durch eine harte Oberfläche eines Abstandshalters (18), der zwischen die erste Masse (4) und die Komponente (1) eingefügt ist, gebildet ist.

**25.** Elektrostatischer Zapfen (100) nach einem der Ansprüche 18 bis 24, **dadurch gekennzeichnet, dass** die Komponente (1) eine Unruh ist, deren Schwenkachse (D) mit einer Längsachse (D1) zwischen dem ersten Ende (2) und dem zweiten Ende (3) zusammenfällt.

**26.** Uhrwerk (1000), das wenigstens einen elektrostatischen Zapfen (100) nach einem der Ansprüche 18 bis 25 umfasst.

**27.** Zeitmessgerät, das wenigstens ein Uhrwerk (1000) nach Anspruch 26 und/oder wenigstens einen elektrostatischen Zapfen (100) nach einem der Ansprüche 18 bis 25 umfasst.

**Claims**

**1.** Magnetic pivot (100) comprising a timepiece component (1) made of at least partially magnetically permeable, or at least partially magnetic material, and which component (1) comprises a first end (2) and a second end (3), said magnetic pivot (100) comprising a device (10) for guiding the pivoting of said timepiece component (1), which guide device (10) comprises, at a greater air-gap (E) distance, by the value of a determined operational play (J), than the distance of centres (L) between said first end (2) and said second end (3), a first surface (5) of a first pole piece (4) and a second surface (7) of a second pole piece (6), said first pole pieces (4) and said second pole piece (6) being arranged, either each to be attracted by a magnetic field transmitted by one of said first end (2) or said second end (3) of said component (1), or each to generate a magnetic field attracting one of said first end (2) or said second end (3), such that the magnetic attraction forces being exerted on said component (1) at said first end (2) and said second end (3) thereof are of different intensity, so as to attract said component (1) via one of said two first (2) or second (3) ends thereof, into direct or indirect contact on only one of said first surface (5) or said second surface (7), **characterized in that** the air-gap distance (E) between said first surface (5) and said second surface (7) is dimensioned to ensure said determined operational play (J) over the entire operating temperature range of said guide device (10) and of said component (1), and **in that** said determined operational play (J) is greater than or equal to 0.020 mm, and **in that** said component (1) comprises a shaft-like portion that extends between said first end (2) and said second end (3) thereof, and **in that**, on both sides of said first end (2) and of said second end (3), on said first (4) and said second (6) pole piece, a first magnetic field and a second magnetic field of opposite directions, each having revolution symmetry about a pivot axis (D), tend to align said component (1) along said pivot axis (D) and to attract said component (1) towards said pole piece (4; 6) thereof, the density of said first magnetic field in proximity to said first end (2) being greater than that of said second magnetic field in proximity to said second end (3), so as to attract said first end (2) into contact with said first pole piece (4), and further **characterized in that** the magnetic field density in proximity to said first surface (5) and said second surface (7) is greater than or equal to 100000 A/m, and **in that** said pivotal guide device (10) comprises shielding means (20) arranged to prevent the action of any magnetic field with a radial component relative to said pivot axis (D), in proximity to said first (5) and second (7) contact surfaces.

2. Magnetic pivot (100) according to claim 1, **characterized in that** said shielding means (20) includes at least one tubular part (21; 22) centred on said pivot axis (D) and surrounding said first pole piece (4) and said second pole piece (6), and at least said second end (3) of said component (1).

3. Magnetic pivot (100) according to claim 1 or 2, **characterized in that** said first pole piece (4) and said second pole piece (6) are each made of magnetic or magnetically permeable material, and are magnetic if said component (1) is not, said first pole piece (4) and said second pole piece (6) together defining a pivot axis (D) on which is aligned a longitudinal axis (D1) of said component (1), joining said first end (2) and second end (3) of the latter, when said component (1) is inserted between said first pole piece (4) and second pole piece (6).

4. Magnetic pivot (100) according to claim 3, **characterized in that** said first pole piece (4), or respectively said first end (2), generates, in proximity to said first surface (5), a first magnetic field along said pivot axis (D), which tends to move said first pole piece (4) closer to said first end (2), and which is of greater density than the density of a second magnetic field along said pivot axis (D), generated in proximity to said second surface (7) by said second pole piece (6), or respectively said second end (3), wherein said second magnetic field tends to move said second pole piece (6) closer to said second end (3), such that said first end (2) is held in contact with said first surface (5), and such that said longitudinal axis (D1) of said component (1) coincides with said pivot axis (D), and said second end (3) then remains at a distance from said second surface (7).

5. Magnetic pivot (100) according to any of claims 1 to 4, **characterized in that** the magnetic permeability of the material of said component (1) is selected, and the magnetisation, as appropriate, of said first pole piece (4) and said second pole piece (6) on the one hand, and/or of said component (1) on the other hand, is determined, such that said first magnetic field and said second magnetic field exert on said component (1) attraction forces greater than ten times the gravitational force of attraction on said component (1).

6. Magnetic pivot (100) according to any of claims 1 to 5, **characterized in that** the magnetic permeability of the material of said component (1) is selected, and the magnetisation, as appropriate, of said first pole piece (4) and said second pole piece (6) on the one hand, and/or of said component (1) on the other hand, is determined, such that said first magnetic field and said second magnetic field exert on said component (1) attraction forces greater than ten times the gravitational force of attraction on said component (1) in any position thereof.

7. Magnetic pivot (100) according to any of claims 1 to 6, **characterized in that** at least said first surface (5) includes a hard coating or is formed by a hard surface of a connecting piece (18) inserted between said first pole piece (4) and said component (1).

8. Magnetic pivot (100) according to any of claims 1 to 7, **characterized in that** the pivot includes magnetic field loop means between said first pole piece (4) and said second pole piece (6).

9. Magnetic pivot (100) according to any of claims 1 to 8, **characterized in that** said guide device (10) includes means of access for the insertion of said component (1) into said air-gap, or said guide device (10) can be dismantled into several parts including means for cooperating with each other and/or with a bridge (31), and/or a plate (30), to enable said component (1) to be mounted resting, via said first end (2) thereof, on a first part including said first surface (5) and said first pole piece (4), prior to the assembly of a second part including said second surface (7) and said second pole piece (6).

10. Magnetic pivot (100) according to any of claims 1 to 9, **characterized in that** said component (1) has a spindle-shaped portion (8) rotating about said longitudinal axis (D1), whose section decreases from the centre of gravity of said component (1) towards said second end (3), so as to improve the magnetic field gradient, in proximity to said second surface (7) and to facilitate the centring of said second end (3) on said pivot axis (D).

11. Magnetic pivot (100) according to any of claims 1 to 10, **characterized in that** said component (1) is a balance or a sprung balance whose pivot axis (D) coincides with said longitudinal axis (D1) thereof between said first end (2) and said second end (3).

12. Magnetic pivot (100) according to claim 11, **characterized in that** at least the felloe and the arms of said balance are made of magnetically inert material, or silicon, or a material with very low magnetic permeability, and/or made using MEMS or LIGA technologies, or in an at least partially amorphous material, and **in that** said balance includes, either an arbor that is magnetic or made of magnetically permeable material, passing through the main axis of inertia thereof, or two semi arbors that are aligned on both sides of the balance on the same axis, and magnetic or made of magnetically permeable material.

13. Magnetic pivot (100) according to any of claims 1 to 12, **characterized in that** said component (1) includes a substantially shaft-like portion made of magnetically permeable material, and **in that** said first pole piece (4) and said second pole piece (6) are each made of magnetic material.

14. Magnetic pivot (100) according to any of claims 1 to 12, **characterized in that** said component (1) includes a substantially shaft-like portion made of magnetic material, and **in that** said first pole piece (4) and said second pole piece (6) are each made of magnetically permeable material.

15. Magnetic pivot (100) according to any of claims 1 to 12, **characterized in that** said component (1) includes a substantially shaft-like portion made of magnetic material, and **in that** said first pole piece (4) and said second pole piece (6) are each made of magnetic material.

16. Timepiece movement (1000) including at least one magnetic pivot (100) according to any of claims 1 to 15.

17. Timepiece including at least one timepiece movement (1000) according to claim 16, and/or at least one magnetic pivot (100) according to any of claims 1 to 15.

18. Electrostatic pivot (100) comprising a timepiece component (1) made of at least partially electrostatically permeable, or at least partially electrostatic material, and which comprises a first end (2) and a second end (3), **characterized in that** said electrostatic pivot (100) comprises a device (10) for guiding the pivoting of said timepiece component (1), comprising, at a greater air-gap (E) distance, by the value of a determined operational play (J), than the distance of centres (L) between said first end (2) and said second end (3), a first surface (5) of a first pole piece (4) and a second surface (7) of a second pole piece (6), said first pole piece (4) and said second pole piece (6) being arranged, either each to be attracted by an electrostatic field transmitted by one of said first end (2) or said second end (3), or each to generate an electrostatic field attracting one of said first end (2) or said second end (3), such that the electrostatic attraction forces being exerted on said component (1) at said first end (2) and said second end (3) thereof are of different intensity, so as to attract said component (1) via one of said two first (2) or second (3) ends thereof, into direct or indirect contact on only one of said first surface (5) or second surface (7).

19. Electrostatic pivot (100) according to claim 18, **characterized in that** said first pole piece (4) and said second pole piece (6) are each movable in a chamber between two stop members (41, 42) respectively (43, 44).

20. Electrostatic pivot (100) according to claim 18 or 19, **characterized in that** said component (1) is made of conductive material if said first pole piece (4) and said second pole piece (6) are electrically charged and charged with sufficient energy, or **in that** said first pole piece (4) and said second pole piece (6) are made of conductive material if said component (1) is electrized and charged, said conductive material being polarized by induction as a result of the parts that are permanently charged.

21. Electrostatic pivot (100) according to claim 18 or 19, **characterized in that** said component (1) is made of dielectric, insulating or semi-conductive material, if said first pole piece (4) and said second pole piece (6) are electrized and charged with sufficient energy, or **in that** said first pole piece (4) and said second pole piece (6) are made of dielectric, insulating or semi-conductive material, if said component (1) is electrized and charged, the polarization then being limited to the surface of said dielectric.

22. Electrostatic pivot (100) according to any of claims 18 to 21, **characterized in that** said component (1) comprises a substantially shaft-like portion made of at least electrostatically permeable or at least electrostatic material, extending between said first end (2) and said second end (3) together defining a longitudinal axis (D1), and **in that** said guide device (10) includes means of access for the insertion of said component (1) into said air-gap, or **in that** said guide device (10) can be dismantled into several parts including means for cooperating with each other and/or with a bridge (31), and/or a plate (30), to enable said component (1) to be mounted resting, via said first end (2) thereof, on a first part including said first surface (5) and said first pole piece (4), prior to the assembly of a second part including said second surface (7) and said second pole piece (6).

23. Electrostatic pivot (100) according to any of claims 18 to 22, **characterized in that** the air-gap distance (E) between said first surface (5) and said second surface (7) is dimensioned to ensure said determined operational play (J) over the entire operating temperature range of said guide device (10) and of said component (1), and **in that** said determined operational play (J) is greater than or equal to 0.020 mm.

24. Electrostatic pivot (100) according to any of claims 18 to 23, **characterized in that** at least said first surface (5) includes a hard coating or is formed by a hard surface of a connecting piece (18) inserted between said first pole piece (4) and said component (1).

25. Electrostatic pivot (100) according to any of claims 18 to 24, **characterized in that** said component (1) is a balance whose pivot axis (D) coincides with a longitudinal axis (D1) between said first end (2) and said second end (3).

26. Timepiece (1000) comprising at least one electrostatic pivot (100) according to any of claims 18 to 25.

27. Timepiece including at least one timepiece movement (1000) according to claim 26 and/or at least one electrostatic pivot (100) according to any of claims 18 to 25.

EP 2 450 758 B1

# Fig. 1

# Fig. 2

# Fig. 3

# Fig. 4

# Fig. 5

Fig. 6

Fig. 7

Fig. 8

Fig. 9

## Fig. 10

## Fig. 12

## Fig. 11

## RÉFÉRENCES CITÉES DANS LA DESCRIPTION

**Documents brevets cités dans la description**

- DE 19854063 A1, JAGMANN VLADIMIR
- DE 1220224 B
- FR 1115966 A
- DE 1734590
- GB 739979 A
- US 3496780 A